# EUROPEAN PATENT SPECIFICATION

(11) **EP 2 066 143 B1**
(45) Date of publication and mention of the grant of the patent: **06.04.2011**
(21) Application number: 07023184.0
(22) Date of filing: 29.11.2007
(51) Int. Cl.: H04W 24/00

(54) **Radio cell performance monitoring and/or control based on user equipment positioning data and radio quality parameters**
Funkzellenleistungsüberwachung und/oder -steuerung basierend auf den Endgerätpositionierungsdaten und Funkqualitätsparametern
Surveillance de la performance d'une cellule radio et/ou contrôle basé sur des données de positionnement de l'équipement et des paramètres de la qualité radio

(43) Date of publication of application: 03.06.2009
(73) Proprietor: Nokia Siemens Networks Oy, 02610 Espoo (FI)
(72) Inventor: Mattila, Jyrki, 90240 Oulu (FI)
(74) Representative: Bruglachner, Thomas E.

(56) References cited:
- WO-A-2007/048176
- WO-A-2007/100230
- US-A1- 2005 143 090

## Description

The present invention refers to radio cell performance monitoring and/or control in broadband fixed radio access networks or broadband cellular mobile radio access networks according to the ETSI/BRAN standard, such as e.g. conventional Universal Terrestrial Radio Access Networks (UTRANs), or any other type of wireless communication network according to the Wi-Fi or WLAN standard (e.g. Bluetooth, IEEE 802.11 or HiperLAN), the GSM/GPRS standard or the UMTS standard. Thereby, continuously monitored user equipment positioning data and radio link parameters indicating the quality of service (QoS) of a wireless link between a base transceiver station (BTS) located in a mobile radio cell of the wireless cellular network and a mobile terminal (MT) connected to and being served by said base transceiver station, such as e.g. the signal-to-noise-plus-interference ratio (SINR), power class and bit error rate (BER) in uplink and/or downlink direction of the wireless link, may be used for radio cell performance monitoring and/or control. By tracking the current positions of all mobile terminals which are served by the network, hereinafter also referred to as user equipment (UE), the network is able to support location-based services offered to these mobile terminals.

In this context, the invention particularly refers to a network management system with an integrated alarm signaling unit, said network management system having access to a base transceiver station's link performance monitoring system and/or location measurement unit (LMU), wherein the latter is used for measuring current UE positioning information signals that are transmitted from a standard mobile terminal or specific wireless user equipment via the air interface of a fixed or mobile radio access network (RAN) to a base transceiver station of said network. The invention is thereby founded upon (but not limited to) the expectation that UE positioning features will become more accurate, reliable and common in the future and that UE positioning will eventually be "business as usual".

### BACKGROUND OF THE INVENTION

Fourth generation mobile networks will allow end users to roam over different network technologies, such as based on the UMTS, CDMA2000 and Wi-Fi standard. These networks make it possible to determine the location of the mobile terminal, which can then be used by diverse service applications to provide enhanced wireless services. Thereby, each mobile network technology has its own specific way to determine a mobile terminal's location and to provide this information to the end user or to a mobile application.

Getting to know the current position and eventually the current velocity of a moving mobile terminal, such as e.g. a mobile phone or personal digital assistant (PDA), does not only mean for the user being provided with valuable information, but is also necessary and useful for many operations during the connection setup of a wireless link. Cellular telecommunication systems can be equipped to perform a number of different positioning methods to enable location services to cellular subscribers. In the following, different methods for allowing UE positioning in mobile radio systems and some well-chosen UE positioning systems (such as e.g. Cell-ID, Ecell-ID, A-GPS, OTDOA-IPDL, UTDOA, RTD and ADOA) and application scenarios shall at least briefly be mentioned.

The exact position of a mobile terminal is especially needed for selecting a base transceiver station when establishing a wireless connection (resource management), executing a handover to another base transceiver station during an existing wireless link used for transferring text messages, speech data, audio or video data via the air interface, performing a distance-based power control, providing location-based services, network planning and QoS maintenance dependent on the current location of a mobile network subscriber's mobile terminal or for calculating mobile communication charges (home zone, long-distance calls, etc.).

Aside from their physical methods of measurement and their accuracy, the different methods for detecting the current position of a subscriber's mobile terminal (MT) differ in the node of the underlying mobile radio system at which wireless RF signals are measured and at which node the current position of this mobile terminal is calculated. In particular, these nodes may e.g. be base transceiver stations or specific location measurement units and location servers.

Today's UE positioning methods as known from the prior art can be classified into a variety of distinct patent classes: from mobile dialing systems (H04Q), data transfer (H04B), radio direction finding and navigation systems (G01S), security tasks (G08G/B), automotive technology (B60R, B61L) up to medicine (A). Applications where a mobile radio system is used for transferring UE positioning data in combination with the satellite-based Global Positioning System (GPS), however, cover a considerably larger field.

The most important UE positioning methods are described in "Stage 2 Functional Specification of User Equipment (UE) Positioning in UTRAN" (3GPP TS 25.305, 3rd Generation Partnership Project) by the Technical Specification Group Radio Access Network and, at least partially, in "The GSM System for Mobile Communications (Cell & Sys., Palaiseau (France), 1992, ISBN 2-9507190-0-7) by M. Mouly and M. Pautet. At least some of them will be briefly described in the following sections.

A cellular mobile radio network typically consists of a number of mobile radio cells whose respective sizes are given by the radio coverage range of a base transceiver station which is located in the center of the respective cell. If this range is subdivided into sectors by means of directional antennas, these sectors respectively constitute a mobile radio cell. When a mobile terminal is switched on, it dials into a mobile radio cell of the cellular network which provides best reception quality. The mobile terminal thereby receives a unique cell identifier (cell ID) via a mobile radio channel and uses these and other data (e.g. synchronization information) to communicate with the base transceiver station of said mobile radio cell and to register itself in the respective cell. The cell identifier for the mobile radio cell into which the mobile terminal is dialed is also sent to a data base such that the system knows at any time over which base transceiver station(s) a mobile terminal can be called and to which destination node an incoming call has to be routed.

A relatively simple method for providing positioning information is therefore to use a cell-ID based positioning method which uses a cell identifier referring to the mobile radio cell of the wireless cellular network where said user equipment is currently located. As the positions of the base transceiver stations are known to the mobile radio system, the current position of the mobile terminal can easily be determined by means of a cell identifier which refers to the cell where said user equipment is currently located. More precisely, a description of the geographical area covered by the cell which is related to the cell-ID, also referred to as Geographical Area Information (GAI), is used to find out the current position of the UE. The GAI identifies the geographical area of the respective cell and is represented by a polygon. This implies that the location of a UE can be determined by identifying the mobile radio cells, or one of these cells, where the UE is currently located and by associating the identity of the cell or cells with the GAI. The position of the mobile terminal is hence determined with cell granularity. In case of a radio access network (RAN), the radio network controller (RNC) typically determines a 3-15 corner polygon that defines the geographical extension of the cell. The corners of this polygon are given as latitude-longitude pairs in the WGS114 geographical reference system. However, the size of a cell strongly varies due to the network planning, such that the accuracy of the position can lie between 100 meters in urban areas with high subscriber density and up to 35 kilometers in peripheral and rural areas. Furthermore, the mobile terminal may also receive cell identifiers of neighboring cells via other wireless links, so as to be able, in case of a degradation of reception quality in the current cell, to rapidly and without any loss of data execute a handover to a base transceiver station of an adjacent mobile radio cell.

Enhanced cell-ID (Ecell-ID) positioning augments the Cell-ID positioning with auxiliary information that narrows down the area which is determined by the cell polygon. The most useful method in the wideband code division multiple access (W-CDMA) system is the round trip time (RTT) measurement. This measurement determines the travel time, back and forth, from the base transceiver station to the UE and back. Using the speed of light, the distance from the known position of the base transceiver station to the UE can be calculated, said distance defining a circular stripe around the base transceiver station where the UE is located, wherein the thickness of this stripe is given by the measurement uncertainty. The Ecell-ID method is obtained by noticing that the UE is located both in the respective mobile radio cell and in the circular stripe. Hence, the UE is located in the intersection of these two geographical regions.

If there is no precise positioning information available for a call setup, DE 199 44 007 A1 describes that a radio paging signal is transmitted by the respective Mobile Switching Center (MSC) before establishing the connection. Based on the reply of the mobile terminal, the serving base transceiver station can be found and the call can precisely be directed to the corresponding base transceiver station.

DE 100 04 738 C1 uses a cell identifier to determine the pre-dial code of a current local fixed network. This pre-dial code is automatically put before the dialed fixed network number without requiring any cooperation of the user. A mobile subscriber is thus enabled to call a fixed network subscriber whose pre-dial code is not known to him though knowing his/her dial number.

An international pre-dial code and a network pre-dial code of the home network are automatically selected in accordance with DE 197 11 096 A1 and employed for the setup of a communication link if the mobile terminal finds out that it is located abroad.

Due to the dependency between the signal strength of a wireless RF signal that is received from a mobile terminal located in a mobile radio cell of a wireless cellular network and the distance of the receiving base transceiver station to the respective mobile terminal, signal strength measurements can lead to a more precise UE positioning, which is due to the fact that the positions of the base transceiver stations in the particular mobile radio cells are known. When the signal strength of a wireless RF signal received from a mobile terminal is measured, one ideally obtains (when assuming line-of-sight connection) a circle around the location of the receiving base transceiver station for a given set of all positions where a mobile terminal whose current position is searched can possibly be located, which is due to the unique relationship between said signal strength and the distance of said mobile terminal to the receiving base transceiver station.

In DE 195 33 472 A1, signal strengths of wireless RF signals received from a mobile terminal are predicted by its serving base transceiver station as well as by its neighboring terminals and correlated with corresponding measurements of the respective mobile terminal. After that, a similarity measure is calculated. Finally, a position is assigned to the mobile terminal where the correlation coefficient takes on its maximum value. As shown in DE 102 32 177 B3, the computational effort of this procedure can be decreased when the search space is restricted based on the minimum received signal strengths of the base transceiver stations. The accuracy of the respectively applied UE positioning method can be increased by using hybrid methods where e.g. the angle of bearing is additionally determined by using a directional antenna (DE 101 61 594 A1).

Assisted GPS (A-GPS) positioning is an enhancement of the US military global positioning system (GPS). Thereby, GPS reference receivers which are e.g. attached to a cellular communication system are used for collecting assistance data which, when transmitted to GPS receivers in terminals connected to the cellular communication system, enhances the performance of the GPS terminal receivers. Typically, A-GPS accuracy can become as good as 10 meters. The accuracy becomes worse in dense urban areas and indoors, where sensitivity is often not high enough for detecting very weak signals from the GPS satellites.

In the time difference of arrival (TDOA) positioning method, the propagation time of a wireless RF signal transmitted from a mobile terminal to a base transceiver station is measured. This time is then converted into a distance by calculating the product of said propagation time with the velocity of light. The problem is thereby to achieve an exact synchronization of transmitter and receiver, since smallest deviations in time may lead to considerable errors as to said distance value. Although mobile terminal and base transceiver station can be synchronized with the GPS system time, this is relatively expensive, in particular as far as concerns the mobile terminal.

A quite good positioning accuracy of approximately 50 meters can be accomplished by using the downlink time difference of arrival (OTDOA) positioning method, which refers to a positioning method that, similar to A-GPS, relies on measuring the observed time difference of arrival (OTDOA) of a mobile terminal's wirelessly transmitted signals that are received at the location measurement units (LMUs) of the corresponding base transceiver station which is connected to said mobile terminal via the air interface. The LMUs must either be synchronized (e.g. with GPS), or the time deviation has to be calculated by using said LMUs for mutually measuring the time difference, thereby knowing the distances of the LMUs from each other. The OTDOA-IPDL method thereby performs UE measurements of pilot signals transmitted from several base transceiver stations. The measurement results are signaled to the RNC, where a hyperbolic trilateration method is used for calculating the position of a UE. In order to enhance the hearability of the radio base transceiver stations in the UE, there is a possibility to use idle periods in the downlink (IPDL) in order to attenuate the transmissions from the base transceiver station to which the UE is connected. This reduces the interference and hence enhances the hearability of other radio base transceiver stations. A tentative advantage with OTDOA-IPDL is that it theoretically provides a better indoor coverage than does A-GPS.

Uplink time difference of arrival (UTDOA) is a positioning method which is currently under standardization within the 3GPP organization. It is comparable to A-GPS in that it relies on time difference of arrival measurements. However, the UTDOA method uses BTS (or separate LMU) measurements of signals transmitted from the positioned UE. The transmitted signal is detected in a number of base transceiver stations or LMUs, after which the measured results are signaled to a positioning node where the position of the UE is determined by a trilateration method. In order to be able to detect the time of arrival from measurements of opportunity from the UE, a reference signal first needs to be created in a master LMU or master BTS. This is done by decoding of the signal, followed by reconstruction of the chip stream which then forms the reference signal. An advantage of UTDOA positioning is that it provides a better indoor coverage than does A-GPS.

A further possibility for obtaining UE positioning information is offered by the round trip delay (RTD) positioning method, which consists in measuring the time delay for the propagation of a wireless RF signal transmitted from the mobile terminal which is located in a mobile radio cell of the wireless cellular network to the corresponding base transceiver station which serves said mobile terminal. This method can also be carried out without having a base transceiver station being synchronized to said mobile terminal. According to this method, the time which is required by a wireless RF signal transmitted by the mobile terminal to arrive at the base transceiver station and return back to the mobile terminal is measured. Thereby, transit time within the base transceiver station and the processing time in the mobile terminal are estimated. Since these times may greatly differ, depending on the respective manufacturer, this method does not provide a high level of exactness.

Another approach for positioning user equipment in mobile radio cells of a wireless cellular network is given by the angle difference of arrival (ADOA) technique, which is known as a method for determining the angle of arrival of an incoming electromagnetic wave received from a mobile terminal at the locations of base transceiver stations which are connected to said mobile terminal via the air interface. When the angle of arrival is determined for at least two base transceiver stations, the position of the mobile terminal is obtained as the intersection point of two straight lines. To execute this positioning method, directional antennas (preferably antenna arrays) are needed at which the phase difference of the arriving wave at the individual antenna elements is measured. Thereby, an accuracy of less than 100 meters can be achieved.

As described above, there exist different technologies for determining the current location of a UE. And probably there are and will come other UE positioning methods in the future. Aside therefrom, the Nokia NetAct operating support system provides diverse network control and management features 10 linked to the UE location data. For example, NetAct is able to trace incoming calls, collect UE performance indicators and follow the location of a UE on the cell level, which actually are the basic network operating control functions.

WO2007/100230 relates to a method for measuring quality of a wireless network of a mobile communication system. The method includes a wireless quality analysis server making a location information request to a mobile switching centre in respect of a specific subscriber terminal; the mobile switching centre transmitting a location report request to a radio network controller; the radio network controller transmitting a wireless quality measurement request to the subscriber terminal; the radio network controller receiving a wireless quality measurement report from the subscriber terminal; and the radio network controller extracting data for wireless quality measurement from the wireless quality measurement report and transmitting the data to the wireless quality analysis server.

### SUMMARY OF THE INVENTION

Unfortunately, reliable real-time RAN performance and functionality control on a cell level is relatively difficult and requires different and complex solutions for antenna, 20 cable and active units monitoring. Today, many users are complaining about situations where a malfunction is detected only after some time when the network quality has already been deteriorated.

Moreover, there are a lot of unnecessary site visits due to false alarms which are initiated by antenna lines and active antenna line units in case of a deteriorated link quality.

It is thus an object of the present invention to provide for 30 an easy solution which reliably solves the problems mentioned above so as to reduce the need for a complex and expensive hardware for performance monitoring.

To address this object, a first exemplary embodiment of the present invention is dedicated to a network management system having access to a base transceiver station's link performance monitoring system and location measurement unit, the latter being used for detecting current positioning information signals which are transmitted from a standard mobile terminal or any other, specific type of wireless user equipment via the air interface of a cellular wireless communication network (e.g. a mobile network according to the ETSI/ BRAN, GSM, UMTS, Wi-Fi, W-LAN or IEEE 802.11 standard) to a base transceiver station of said network. Thereby, said network management system may comprise an integrated alarm signaling unit which may be adapted to generate a warning message or alarm signal if at least one continuously monitored radio link parameter indicating the quality of service in uplink and/or downlink direction of the current wireless link established between said base transceiver station and said mobile terminal or wireless user equipment, when the latter is moving, becomes worse than a predefined threshold value, and wherein said radio link parameter is derived from a current measurement of at least one positioning information signal transmitted from said mobile terminal or wireless user equipment to said base transceiver station.

Said threshold value may e.g. indicate a specific value of the corresponding radio link parameter in a fixed range around a certain position of said mobile terminal or wireless user equipment in the mobile radio cell where said base transceiver station is located.

To be more precise, said alarm signaling unit may be adapted to generate said warning message or alarm signal based on the result of a comparison between a currently measured value of the continuously monitored signal-to-noise-plus-interference ratio and/or bit error rate of a positioning information signal transmitted over the wireless link between said base transceiver station and said mobile terminal or wireless user equipment and a previously measured, stored value of the corresponding radio link parameter which indicates the signal-to-noise-plus-interference ratio and/or bit error rate of the corresponding positioning information signal for said mobile terminal or wireless user equipment when being located within a fixed range around a predefined, known position within the aforementioned mobile radio cell.

Alternatively, said alarm signaling unit may be adapted to generate said warning message or alarm signal based on the result of a comparison between a currently measured value of the continuously monitored signal-to-noise-plus-interference ratio and/or bit error rate of a positioning information signal transmitted over the wireless link between said base transceiver station and said mobile terminal or wireless user equipment and a previously measured, stored value of the corresponding radio link parameter which indicates the signal-to-noise-plus-interference ratio and/or bit error rate of the corresponding positioning information signal for said mobile terminal or wireless user equipment when being located at a known position within the intersectional radio cell areas of at least two adjacent base transceiver stations within the coverage range of the cellular wireless communication network.

The described network management system may thereby comprise a storage unit with an integrated data base for recording and storing said positioning information and the corresponding radio link parameter.

According to a further aspect of said first embodiment, said alarm signaling unit may be adapted to generate different levels of a warning message or different levels of an alarm signal depending on the magnitude and/or algebraic sign of the difference between the measured value of the currently detected radio link parameter and the stored value of the corresponding radio link parameter characterizing the quality of service of the wireless link between said base transceiver station and said mobile terminal or wireless user equipment.

A second exemplary embodiment of the present invention is dedicated to a base transceiver station which hosts a network management system having access to said base transceiver station's link performance monitoring system and location measurement unit, the latter being used for detecting current user equipment positioning information signals which are transmitted from a standard mobile terminal or any other, specific type of wireless user equipment via the air interface of a cellular radio access network to a base transceiver station of said network. Thereby, said network management system may comprise an integrated alarm signaling unit which may be adapted to generate a warning message or alarm signal if at least one continuously monitored radio link parameter indicating the quality of service in uplink and/or downlink direction of the current wireless link established between said base transceiver station and said mobile terminal or wireless user equipment, when the latter is moving, becomes worse than a predefined threshold value, and wherein said radio link parameter is derived from a current measurement of at least one positioning information signal transmitted from said mobile terminal or wireless user equipment to said base transceiver station.

Again, said threshold value may e.g. indicate a specific value of the corresponding radio link parameter in a fixed range around a certain position of said mobile terminal or wireless user equipment in the mobile radio cell in which said base transceiver station is located.

The invention thereby foresees that said alarm signaling unit may be adapted to generate said warning message or alarm signal based on the result of a comparison between a currently measured value of the continuously monitored signal-to-noise-plus-interference ratio and/or bit error rate of a positioning information signal transmitted over the wireless link between said base transceiver station and said mobile terminal or wireless user equipment and a previously measured, stored value of the corresponding radio link parameter which indicates the signal-to-noise-plus-interference ratio and/or bit error rate of the corresponding positioning information signal for said mobile terminal or wireless user equipment when being located within a fixed range around a predefined, known position within the aforementioned mobile radio cell.

As an alternative thereto, said alarm signaling unit may be adapted to generate said warning message or alarm signal based on the result of a comparison between a currently measured value of the continuously monitored signal-to-noise-plus-interference ratio and/or bit error rate of a positioning information signal transmitted over the wireless link between said base transceiver station and said mobile terminal or wireless user equipment and a previously measured, stored value of the corresponding radio link parameter which indicates the signal-to-noise-plus-interference ratio and/or bit error rate of the corresponding positioning information signal for said mobile terminal or wireless user equipment when being located at a known position within the intersectional radio cell areas of at least two adjacent base transceiver stations within the coverage range of the cellular radio access network.

The described network management system of said base transceiver station may thereby comprise a storage unit with an integrated data base for recording and storing said positioning information and the corresponding radio link parameter.

According to a further aspect of said second embodiment, said alarm signaling unit may be adapted to generate different levels of a warning message or different levels of an alarm signal depending on the magnitude and/or algebraic sign of the difference between the measured value of the currently detected radio link parameter and the stored value of the corresponding radio link parameter characterizing the quality of service of the wireless link between said base transceiver station and said mobile terminal or wireless user equipment.

A third exemplary embodiment of the present invention is dedicated to a radio network controller for controlling the data transfer between a number of mobile terminals and base transceiver stations interconnected over the air interface of a fixed or mobile cellular radio access network, said radio network controller hosting a network management system having access to a base transceiver station's link performance monitoring system and location measurement unit, the latter being used for detecting current user equipment positioning information signals which are transmitted from a standard mobile terminal or any other, specific type of wireless user equipment via the air interface of said radio access network to a base transceiver station of said network. Thereby, said network management system may comprise an integrated alarm signaling unit which may be adapted to generate a warning message or alarm signal if at least one continuously monitored radio link parameter indicating the quality of service in uplink and/or downlink direction of the current wireless link established between said base transceiver station and said mobile terminal or wireless user equipment, when the latter is moving, becomes worse than a predefined threshold value, and wherein said radio link parameter is derived from a current measurement of at least one positioning information signal transmitted from said mobile terminal or wireless user equipment to said base transceiver station.

Again, said threshold value may e.g. indicate a specific value of the corresponding radio link parameter in a fixed range around a certain position of said mobile terminal or wireless user equipment in the mobile radio cell in which said base transceiver station is located.

The invention thereby foresees that said alarm signaling unit may be adapted to generate said warning message or alarm signal based on the result of a comparison between a currently measured value of the continuously monitored signal-to-noise-plus-interference ratio and/or bit error rate of a positioning information signal transmitted over the wireless link between said base transceiver station and said mobile terminal or wireless user equipment and a previously measured, stored value of the corresponding radio link parameter which indicates the signal-to-noise-plus-interference ratio and/or bit error rate of the corresponding positioning information signal for said mobile terminal or wireless user equipment when being located within a fixed range around a predefined, known position within the aforementioned mobile radio cell.

As an alternative thereto, said alarm signaling unit may be adapted to generate said warning message or alarm signal based on the result of a comparison between a currently measured value of the continuously monitored signal-to-noise-plus-interference ratio and/or bit error rate of a positioning information signal transmitted over the wireless link between said base transceiver station and said mobile terminal or wireless user equipment and a previously measured, stored value of the corresponding radio link parameter which indicates the signal-to-noise-plus-interference ratio and/or bit error rate of the corresponding positioning information signal for said mobile terminal or wireless user equipment when being located at a known position within the intersectional radio cell areas of at least two adjacent base transceiver stations within the coverage range of the cellular radio access network.

The described network management system of said radio network controller may thereby comprise a storage unit with an integrated data base for recording and storing said positioning information and the corresponding radio link parameter.

According to a further aspect of said third embodiment, said alarm signaling unit may be adapted to generate different levels of a warning message or different levels of an alarm signal depending on the magnitude and/or algebraic sign of the difference between the measured value of the currently detected radio link parameter and the stored value of the corresponding radio link parameter characterizing the quality of service of the wireless link between said base transceiver station and said mobile terminal or wireless user equipment.

A fourth exemplary embodiment of the present invention is dedicated to a method for monitoring the link performance of a wireless link between a base transceiver station providing data of a requested location-based service and a standard mobile terminal or any other, specific type of wireless user equipment requesting this service and being connected to said base transceiver station via the air interface of a cellular wireless communication network (such as e.g. a mobile network according to the ETSI/BRAN, GSM, UMTS, Wi-Fi, W-LAN or IEEE 802.11 standard). Thereby, a warning message or alarm signal may be generated if at least one continuously monitored and newly measured radio link parameter indicating the quality of service in uplink and/or downlink direction of the current wireless link established between said base transceiver station and said mobile terminal or wireless user equipment, when the latter is moving, becomes worse than a predefined threshold value, and wherein said radio link parameter is derived from a current measurement of at least one positioning information signal transmitted from said mobile terminal or wireless user equipment to said base transceiver station.

Again, said threshold value may e.g. indicate a specific value of the corresponding radio link parameter in a fixed range around a certain position of said mobile terminal or wireless user equipment in the mobile radio cell in which said base transceiver station is located.

In this connection, said warning message or alarm signal may be generated based on the result of a comparison between a currently measured value of the continuously monitored and newly measured signal-to-noise-plus-interference ratio and/or bit error rate of a positioning information signal transmitted over the wireless link between said base transceiver station and said mobile terminal or wireless user equipment and a previously measured and stored value of the corresponding radio link parameter which indicates the signal-to-noise-plus-interference ratio and/or bit error rate of the corresponding positioning information signal for said mobile terminal or wireless user equipment when being located within a fixed range around a predefined, known position within the aforementioned mobile radio cell.

Alternatively, said warning message or alarm signal may be generated based on the result of a comparison between a currently measured value of the continuously monitored and newly measured signal-to-noise-plus-interference ratio and/or bit error rate of a positioning information signal transmitted over the wireless link between said base transceiver station and said mobile terminal or wireless user equipment and a previously measured and stored value of the corresponding radio link parameter which indicates the signal-to-noise-plus-interference ratio and/or bit error rate of the corresponding positioning information signal for said mobile terminal or wireless user equipment when being located at a known position within the intersectional radio cell areas of at least two adjacent base transceiver stations within the coverage range of the cellular wireless communication network.

According to a further aspect of said fourth embodiment, different levels of a warning message or different levels of an alarm signal may be generated depending on the magnitude and/or algebraic sign of the difference between the measured value of the currently detected radio link parameter and the stored value of the corresponding radio link parameter characterizing the quality of service of the wireless link between said base transceiver station and said mobile terminal or wireless user equipment.

A peculiarity of the present invention is that the network operator may transmit an antenna beam of a beacon type of signal from a base transceiver station in direction to a (previously triangulated or predefined) known fixed position (e.g. a building) within the coverage range of the cellular network and follow performance changes which might occur when said mobile terminal or specific wireless user equipment is moving towards this fixed position where said radio link parameter takes on a previously measured, known reference value. Beam widths and beam directions of the beacon signals should thereby be selected in such a way that base transceiver stations of several mobile radio cells can use them at the same time for monitoring the radio link parameters of a wireless link between the mobile terminal or specific user equipment and the respective base transceiver station.

A fifth exemplary embodiment of the present invention is dedicated to the use of a base transceiver station's location measurement unit for gaining information about the quality of service in uplink and/or downlink direction of a wireless link via the air interface of a cellular mobile radio network between said base transceiver station and a mobile terminal or wireless user equipment connected to and being located in the same mobile radio cell as said base transceiver station. According to the present invention, this may be achieved by measuring current values of at least one detected radio link parameter indicating the signal-to-noise-plus-interference ratio and/or bit error rate of a continuously monitored positioning information signal received from a mobile terminal or user equipment and comparing these current parameter values with at least one previously measured and stored value of the corresponding radio link parameter which indicates the signal-to-noise-plus-interference ratio and/or bit error rate of the corresponding positioning information signal for said mobile terminal or wireless user equipment when being located within a fixed range around a predefined, known position within the aforementioned mobile radio cell or when being located at a known position within the intersectional radio cell areas of at least two adjacent base transceiver stations within the coverage range of the cellular mobile radio network.

A sixth exemplary embodiment of the present invention is dedicated to a computer program product for monitoring the link performance of a wireless link between a base transceiver station providing data of a requested location-based service and a standard mobile terminal or any other, specific type of wireless user equipment requesting this service and being connected to said base transceiver station via the air interface of a cellular wireless communication network (such as e.g. a mobile network according to the ETSI/BRAN, GSM, UMTS, Wi-Fi, W-LAN or IEEE 802.11 standard) when being installed and running on a network management system having access to the base transceiver station's link performance monitoring system and location measurement unit. Thereby, a warning message or alarm signal may be generated if at least one continuously monitored and newly measured radio link parameter indicating the quality of service in uplink and/or downlink direction of the current wireless link established between said base transceiver station and said mobile terminal or wireless user equipment, when the latter is moving, becomes worse than a predefined threshold value, and wherein said radio link parameter is derived from a current measurement of at least one positioning information signal transmitted from said mobile terminal or wireless user equipment to said base transceiver station.

Again, said threshold value may e.g. indicate a specific value of the corresponding radio link parameter in a fixed range around a certain position of said mobile terminal or wireless user equipment in the mobile radio cell in which said base transceiver station is located.

In this connection, said warning message or alarm signal may be generated based on the result of a comparison between a currently measured value of the continuously monitored and newly measured signal-to-noise-plus-interference ratio and/or bit error rate of a positioning information signal transmitted over the wireless link between said base transceiver station and said mobile terminal or wireless user equipment and a previously measured and stored value of the corresponding radio link parameter which indicates the signal-to-noise-plus-interference ratio and/or bit error rate of the corresponding positioning information signal for said mobile terminal or wireless user equipment when being located within a fixed range around a predefined, known position within the aforementioned mobile radio cell.

As an alternative thereto, said warning message or alarm signal may be generated based on the result of a comparison between a currently measured value of the continuously monitored and newly measured signal-to-noise-plus-interference ratio and/or bit error rate of a positioning information signal transmitted over the wireless link between said base transceiver station and said mobile terminal or wireless user equipment and a previously measured and stored value of the corresponding radio link parameter which indicates the signal-to-noise-plus-interference ratio and/or bit error rate of the corresponding positioning information signal for said mobile terminal or wireless user equipment when being located at a known position within the intersectional radio cell areas of at least two adjacent base transceiver stations within the coverage range of the cellular wireless communication network.

According to a further aspect of said sixth embodiment, different levels of a warning message or different levels of an alarm signal may be generated depending on the magnitude and/or algebraic sign of the difference between the measured value of the currently detected radio link parameter and the stored value of the corresponding radio link parameter characterizing the quality of service of the wireless link between said base transceiver station and said mobile terminal or wireless user equipment.

### BRIEF DESCRIPTION OF THE DRAWINGS

These and other aspects of the invention will be elucidated by way of example with respect to the embodiments described hereinafter and with respect to the accompanying drawings. Therein,
- Fig. 1: shows a part of a distributed Universal Terrestrial Radio Access Network (UTRAN) in the scope of which the present invention may advantageously be applied,
- Fig. 2: shows a general system for user equipment positioning within an UTRAN,
- Fig. 3: shows a communication scenario for illustrating a location registering procedure in a public land mobile network,
- Fig. 4: shows a communication scenario for illustrating the call delivering procedure in such a public land mobile network,

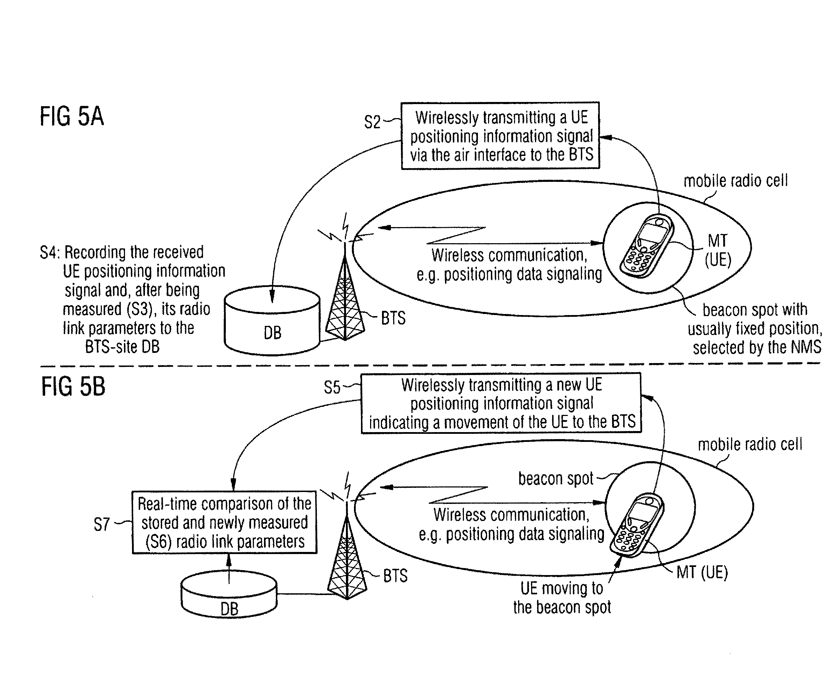

- Fig. 5a: shows an initial communication scenario according to the present invention for a wireless signaling between a base transceiver station and a mobile terminal located in a mobile radio cell of a wireless cellular network, wherein the mobile terminal is located at a defined position (in the following also referred to as "beacon spot") within the mobile radio cell and wherein positioning information as contained in a wirelessly received positioning information signal is recorded to the base transceiver station of the respective cell along with measured radio link parameters in uplink and/or downlink direction of the received positioning information signal,
- Fig. 5b: shows a further communication scenario according to the present invention for a wireless signaling between said base transceiver station and said mobile terminal, wherein the mobile terminal is moving and approaching to the beacon spot or to a location within a defined range around the above- mentioned beacon spot and wherein the measured radio link parameters are compared to the recorded ones when the received positioning information indicates that the mobile terminal is currently located within

- Fig. 5c: the beacon spot, shows a still further communication scenario according to the present invention for a wireless signaling between said base transceiver station and a wireless signaling equipment, wherein the wireless signaling equipment is located at a known fixed position within the intersectional radio cell areas of at least two adjacent base transceiver stations within the coverage range of the cellular mobile radio network,
- Fig. 6: shows a schematic block diagram of the system components as contained in a base transceiver station according to the present invention, and
- Fig. 7: shows a three-part flow chart which illustrates a method according to the present invention for monitoring the link performance of a wireless link between a base transceiver station providing data of a requested location-based service and a standard mobile terminal or any other, specific type of wireless user equipment requesting this service and being connected to said base transceiver station via the air interface of a cellular wireless network.

### DETAILED DESCRIPTION OF THE PRESENT INVENTION

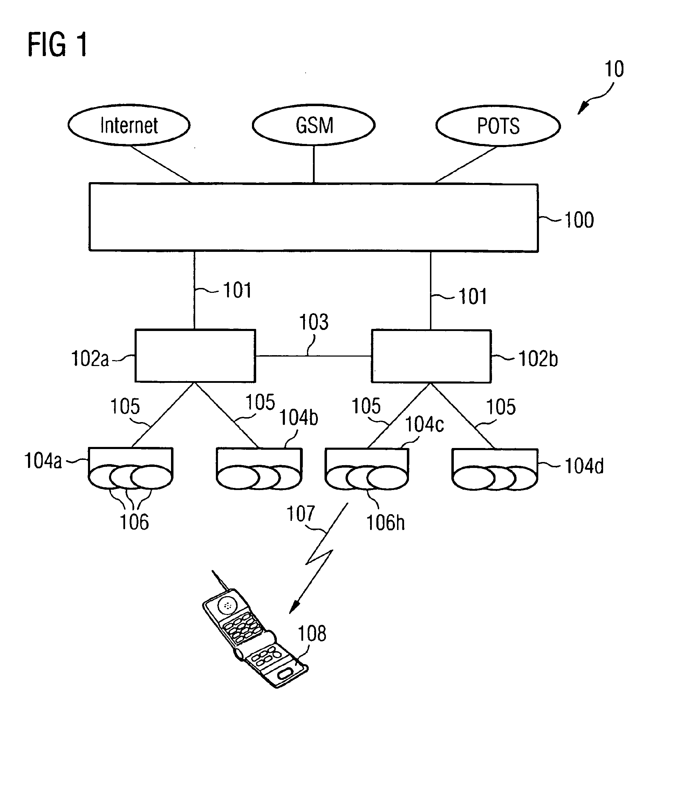

Fig. 1 shows a schematic block diagram of a distributed network 10 according to the Universal Terrestrial Radio Access Network (UTRAN) standard in the scope of which the present invention may advantageously be applied. Radio Network Controllers (RNC) 102a, 102b thereby perform the control of communication connections and network resources respectively of a number of base transceiver stations and are responsible to provide connections to a Core Network 100. RNCs 102a and 102b are connected to "Node B's" 104a-d, wherein one Node B comprises one or more base transceiver stations 106. Each base transceiver station 106 controls the UEs within its covered cell area. Due to the above-mentioned distinction, the RNC may have various roles: Regarding the network resources, RNC 102b acts as a controlling RNC (C-RNC) which is responsible for the control of resources of a part of said network including a number of cells, each of which serving a plurality of UEs 108. Regarding the communication connections, an RNC 102a or 102b acts as the serving RNC (S-RNC) for those connections which terminate in that RNC. However, when a UE 108 moves during an ongoing session from a first RNC 102a, which is the S-RNC for the corresponding communication connection, to a neighboring RNC 102b, the original RNC 102a still remains the S-RNC for this connection while the second RNC 102b, which is in control of the resources that this connection uses, is a drift RNC (D-RNC) that supports the S-RNC 11a with the necessary radio resources; however, without any influence on said connection. Thus, the D-RNC controls at least one cell that is used in a radio connection controlled by a serving RNC and supplies the S-RNC with resources.

Thus, it is a problem, as previously described, that positioning information, that is only based on the cell-ID, is not accurate enough and may hence imply disadvantages for services where a more exact location of the UEs is required.

Another problem is that an S-RNC cannot get sufficient positioning information of a UE that has roamed during an ongoing session to a D-RNC, which provides network resources for said UE, while the S-RNC still controls the connection of said UE.

In order to better understand how location measurement units and Radio Network Controllers work, it is helpful to briefly describe the architecture of a Universal Terrestrial Radio Access Network (UTRAN). Although the content of this section mainly deals with 3^{rd} and 4^{th} generation wireless systems operated according to the Universal Mobile Telecommunication System (UMTS) standard, it should be mentioned that it is also relevant to the Global System for Mobile Communication (GSM) standard.

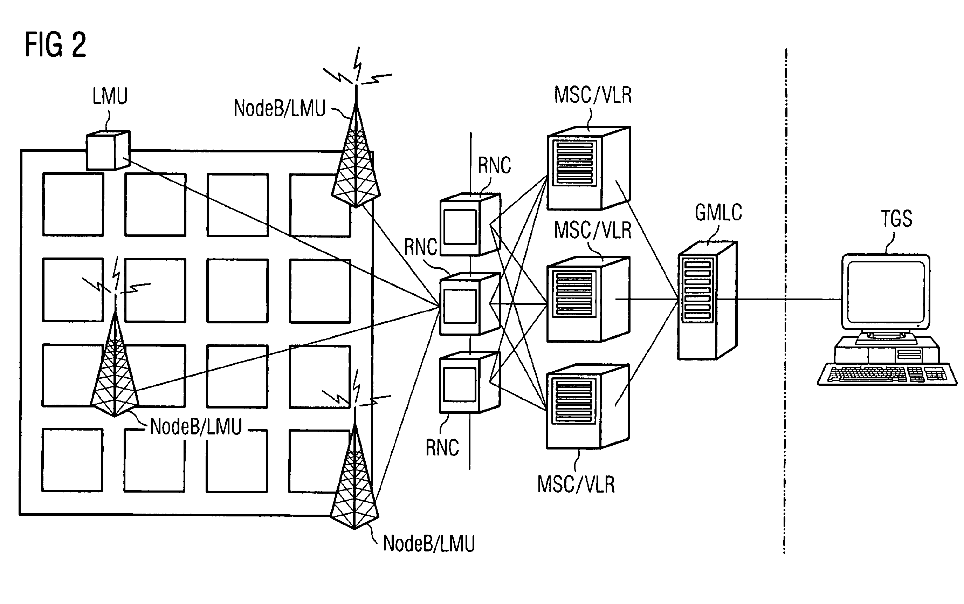

Fig. 2 shows a general system for user equipment positioning within such a UTRAN. A Node B (here referred to as a single base transceiver station BTS) is a network element of UTRAN that may provide measurements for position estimation, make measurements of radio signals and communicate these measurements to the core network. A location measurement unit (LMU), on the other hand, is a dedicated positioning device that makes radio measurements to support at least one positioning method or technology. There are two classes of LMUs: "stand-alone LMUs" and "associated LMUs". A stand-alone LMU is accessed exclusively via the air interface, which means that there is no other connection from a stand-alone LMU to any other network element. However, an associated LMU may make use of the radio apparatus and antennas of its associated Node B. Radio Network Controllers (RNCs) play an important role under the UMTS standard. They can be classified into "controlling RNCs" (CRNCs), "serving RNCs" (SRNCs) and "drift RNCs" (DRNCs):
- CRNCs manage positioning-related resources, broadcast system information, and request UE positioning related measurements from its associated Node B's and LMUs. All positioning and assistance measurements received by an LMU are supplied to a particular CRNC associated with the LMU. Instructions concerning the timing, the nature and any periodicity of these measurements are either provided by the CRNC or are pre-administered in the CRNC.
- SRNCs request information from other RNCs, control the flow of positioning requests, select the positioning method, provide UE positioning assistance data, and coordinate and control the overall UE positioning task. , The SRNC, of course, also provides CRNC functionality with respect to UE positioning for its associated Node B's and LMUs.
- A DRNC is an UTRAN element having an active link to the UE that is being located. The DRNC also provides CRNC functionality with respect to UE positioning for its associated Node B's and LMUs.

The Mobile Switching Centers (MSC) or Visitor Location Registers (VLR) as depicted in Fig. 2 have a functionality associated with user subscription authorization and managing call-related (and non-call-related) positioning requests of a Location Service (LCS). They also perform handover algorithm functions and mobility management. Location-related services of the MSC/VLRs are related to charging and billing, LCS coordination, location request, authorization and operation of LCS services offered by an LCS server.

A Gateway Mobile Location Center (GMLC) as depicted in Fig. 2 is the first node of a public land mobile network (PLMN) that is accessed by an external LCS client. It has the functionality required to support the LCS. As shown in Fig. 2, the GMLC may be connected to a telegeoinformatics server (TGS) which resides outside the core network.

Location management is a two-stage process that enables the network to discover the current attachment point of the mobile user for call delivery. The first stage is location registration (or location update). In this stage, the mobile terminal periodically notifies the network of its new access point, allowing the network to authenticate the user and revise the user's location profile. The second stage is call delivery. Thereby, said network is queried for the user location profile and the current position of the mobile host is found. Current schemes for location management in public land mobile networks are based on a two-level data hierarchy such that two types of network location data base, the home location register (HLR) and the visitor location register (VLR), are involved in tracking a mobile terminal (MT). In general, there is an HLR for each network and a user is permanently associated with an HLR in his/her subscribed network. Information about each user, such as e.g. the types of services subscribed and location information, are stored in a user profile located at the HLR. The number of VLRs and their placements vary among networks. Each VLR stores the information of the MTs (downloaded from the HLR) visiting its associated area. Each VLR is associated with one or more Mobile Switching Centers (MSCs), while a signaling network assures the connection among MSC, HLR and VLR. Signaling System 7 (SS10) is the protocol used for signaling exchange, and the signaling network is referred to as the SS10 network. For PLMN, the location registration procedures update the location data bases (HLR and VLRs) and authenticate the MT when up-to-date location information of an MT is available. The call delivery procedures locate the MT based on the information available at the HLR and the VLRs when a call for a MT is initiated.

In order to correctly deliver calls, the network must keep track of the location of the MT. The location information is stored in two types of data base, VLR and HLR. As the MT moves around the coverage area, the data stored in these data bases may no longer be accurate. To ensure that calls can be delivered successfully, the location registration updating process is performed. The MT initiates location registration when it reports its current location to the network; this location update is performed whenever the MT enters a new location area (LA). Each LA consists of a number of cells and all the base transceiver stations belonging to the same LA are connected to the same MSC. All the base transceiver stations within the same LA broadcast the ID of its LA periodically. When the MT enters a LA, it compares its registered LA ID with the current broadcast LA ID; location update is triggered if the two IDs are different. If the new LA belongs to the same VLR as the old LA, the record at the VLR is updated to record the ID of the new LA. Otherwise, if the new LA belongs to a different VLR, a number of extra steps are required to register the MT at the new serving VLR, update the HLR to record the ID of the new serving VLR and deregister the MT at the old serving VLR.

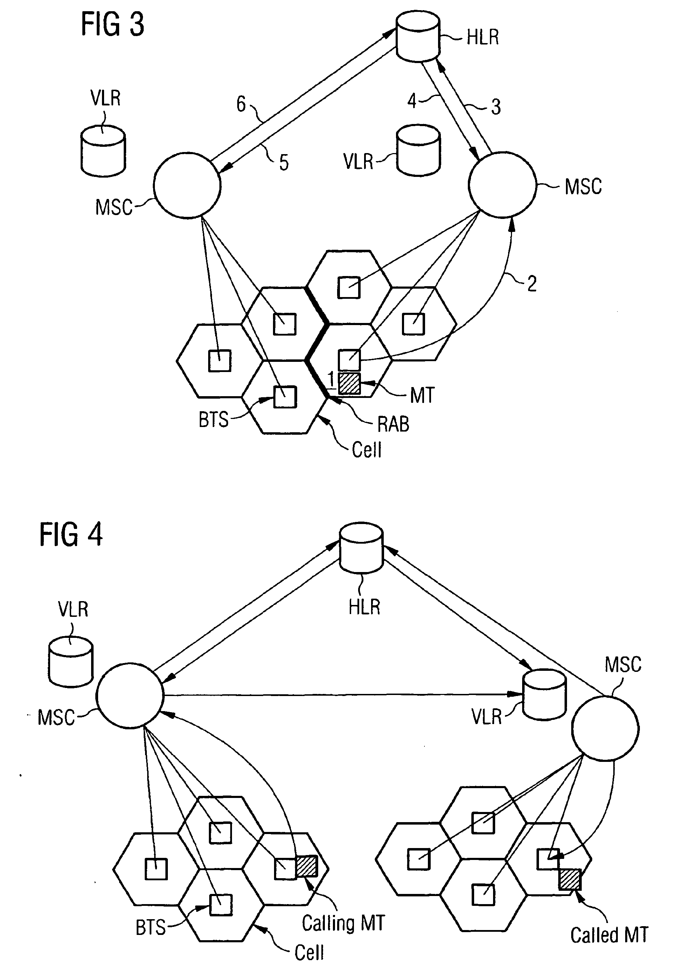

Fig. 3 shows the location registration procedure when the MT moves to a new LA. The following is the ordered list of tasks that are performed during location registration:
1. The MT enters a new LA and transmits a location update message to the new BS.
2. The BTS forwards the location update message to the MSC through a wired link, which launches a registration query to its associated VLR.
3. The VLR updates its record on the location of the MT.
   If the new LA belongs to a different VLR, the new VLR determines the address of the HLR of the MT from its mobile identification number (MIN). This is achieved by a table lookup procedure called global title translation. The new VLR then sends a location registration message to the HLR; otherwise, location registration is complete.
4. The HLR performs the required procedures to authenticate the MT and records the ID of the new serving VLR of the MT. The HLR then sends a registration acknowledgment message to the new VLR.
5. The HLR sends a registration cancellation message to the old VLR.
6. The old VLR removes the record of the MT and returns a cancellation acknowledgment message to the HLR.

Two major steps are involved in call delivery: determining the serving VLR of the called MT, and locating the visiting cell of the called MT. Locating the serving VLR of the MT involves the following data base lookup procedure (see Fig. 4) :
1. The calling MT sends a call initiation signal to the serving MSC of the MT through a nearby BS.
2. The MSC determines the address of the HLR of the called MT by global title translation and sends a location request message to the HLR.
3. The HLR determines the serving VLR of the called MT and sends a route request message to the VLR. This VLR then forwards the message to the MSC serving the MT.
4. The MSC allocates a temporary identifier called temporary location directory number (TLDN) to the MT and sends a reply to the HLR together with the TLDN.
5. The HLR forwards this information to the MSC of the calling MT.
6. The calling MSC requests a call set up to the called MSC through the SS10 network.
7. The called MSC initiates a paging procedure within the current LA of the MT, and the MT replies in order to receive the call.

The procedure described above allows the network to set up a connection from the calling MT to the serving MSC of the called MT. Since each MSC is associated with a LA, and there is more than one cell in each LA is therefore necessary to determine the cell location of the called MT. This is accomplished by a paging procedure such that polling signals are broadcasted to all cells within the residing LA of the called MT. On receiving the polling signal, the MT sends a reply, which allows the MSC to determine its current residing cell.

Fig. 5a shows an initial communication scenario according to the present invention for a wireless signaling between a base transceiver station and a mobile terminal located in a mobile radio cell of a wireless cellular network. In this communication scenario, the mobile terminal is located at a defined position (in the following also referred to as "beacon spot") within the mobile radio cell. A wireless RF signal which is used for carrying positioning information indicating the current location of said mobile terminal is transmitted to the base transceiver station of the corresponding mobile radio cell. In the base transceiver station, where said RF signal is wirelessly received, said positioning information is stored in an integrated data base along with measured radio link parameters (signal-to-noise-plus-interference ratio, bit error rate, etc.) which are derived from the received positioning information signal. These radio link parameters thereby indicate the quality of service of the respective wireless link between the mobile terminal and said base transceiver station in uplink and/or downlink direction.

In Fig. 5b, a further communication scenario for a wireless signaling between said base transceiver station and said mobile terminal is shown. Therein, the mobile terminal is moving and approaching to said beacon spot or to a location within a defined range around said beacon spot. The depicted scenario shows that currently measured radio link parameters indicating the quality of service of the respective wireless link between the mobile terminal and said base transceiver station are compared with corresponding radio link parameters which have previously been recorded for said mobile terminal when the received positioning information indicates that the respective mobile terminal is currently located within the beacon spot.

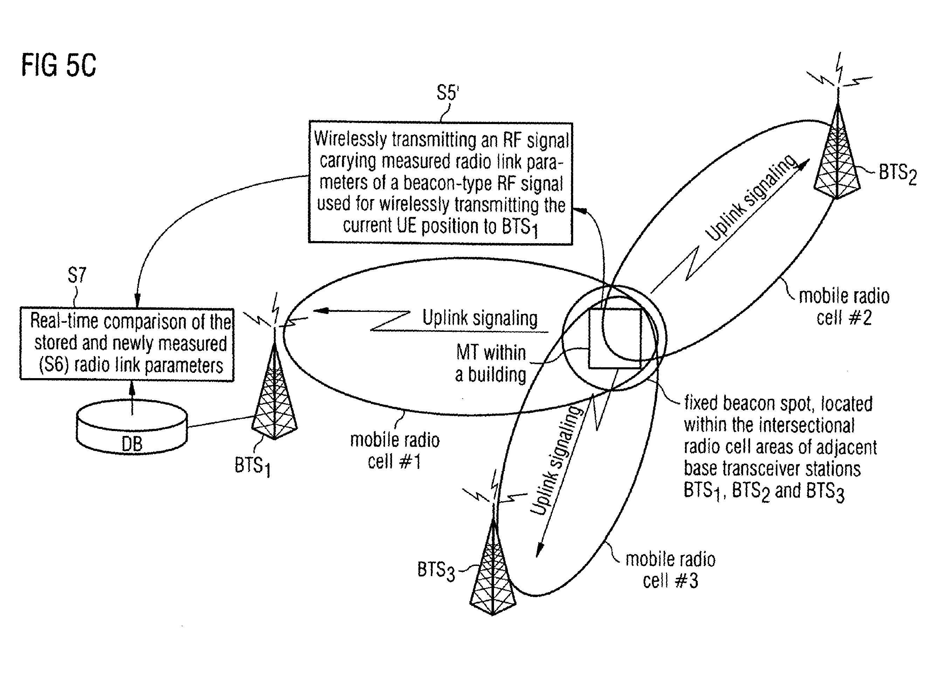

Fig. 5c finally shows a still further communication scenario for a wireless signaling between said base transceiver station and a wireless signaling equipment. In contrast to the communication scenarios described above, the wireless signaling equipment may e.g. be located at a known fixed position within the intersectional radio cell areas of at least two adjacent base transceiver stations within the coverage range of the cellular mobile radio network. At this position, all measured radio link parameter take on previously measured, known reference values. According to the present invention, wireless positioning information signals which are received at any one of these base transceiver stations may be used for radio network performance monitoring. This may e.g. be done in that a network operator may transmit an antenna beam of a beacon type of signal from a base transceiver station in direction to said known fixed position and follow performance changes which might occur when said mobile terminal MT or specific wireless user equipment UE is moving towards or away from this fixed position. Beam widths and beam directions of the beacon signals should thereby be selected in such a way that base transceiver stations of several mobile radio cells can use them at the same time for monitoring the radio link parameters of a wireless link between the mobile terminal or specific user equipment and the respective base transceiver station, which has also been mentioned above.

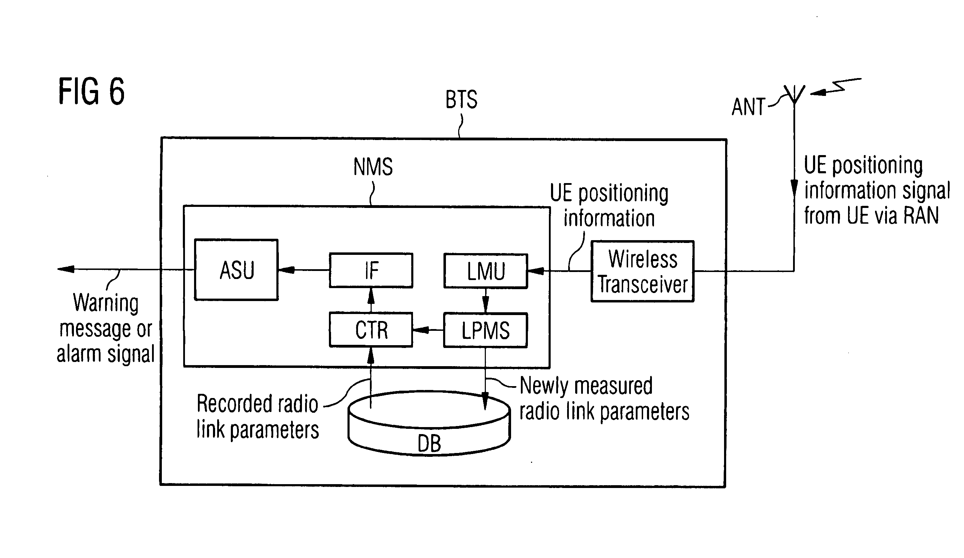

A schematic block diagram of the system components as contained in a base transceiver station BTS according to the present invention is depicted in Fig. 6. Said base transceiver station thereby comprises a network management system NMS having access to the base transceiver station's link performance monitoring system LPMS and location measurement unit LMU, wherein the latter, as described above, is used for detecting current positioning information signals which are received from a standard mobile terminal MT or any other, specific type of wireless user equipment UE via the air interface of a wireless communication network, wherein said network may e.g. be given by a mobile network according to the ETSI/BRAN, GSM, UMTS, Wi-Fi, W-LAN or IEEE 802.11 standard. The depicted network management system is further equipped with an integrated alarm signaling unit ASU which may be adapted to generate a warning message or alarm signal if at least one continuously monitored radio link parameter indicating the quality of service (QoS) in uplink and/or downlink direction of the current wireless link established between said base transceiver station BTS and said mobile terminal MT or wireless user equipment UE, when the latter is moving, becomes worse than a predefined threshold value or previously measured, known radio link parameter stored in a BTS-site data base DB. As described above, said radio link parameter is derived from a current measurement of at least one positioning information signal transmitted from said mobile terminal MT or wireless user equipment UE to said base transceiver station BTS. The above-described comparison of the currently measured radio link parameter and the stored value of the corresponding radio link parameter is done by the processing means of a controller CTR which is connected to said alarm signaling unit ASU via control data output interface IF.

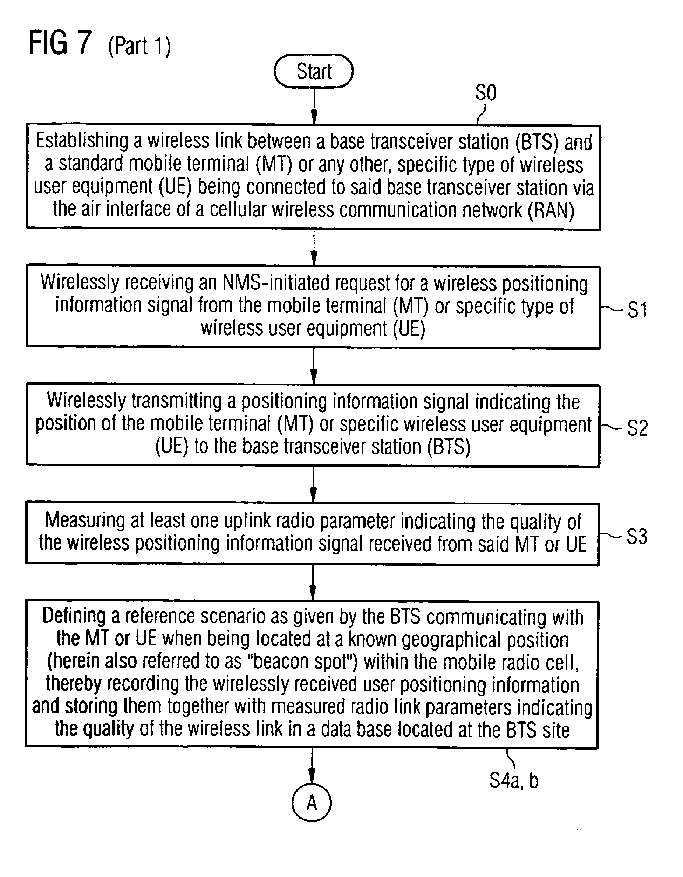

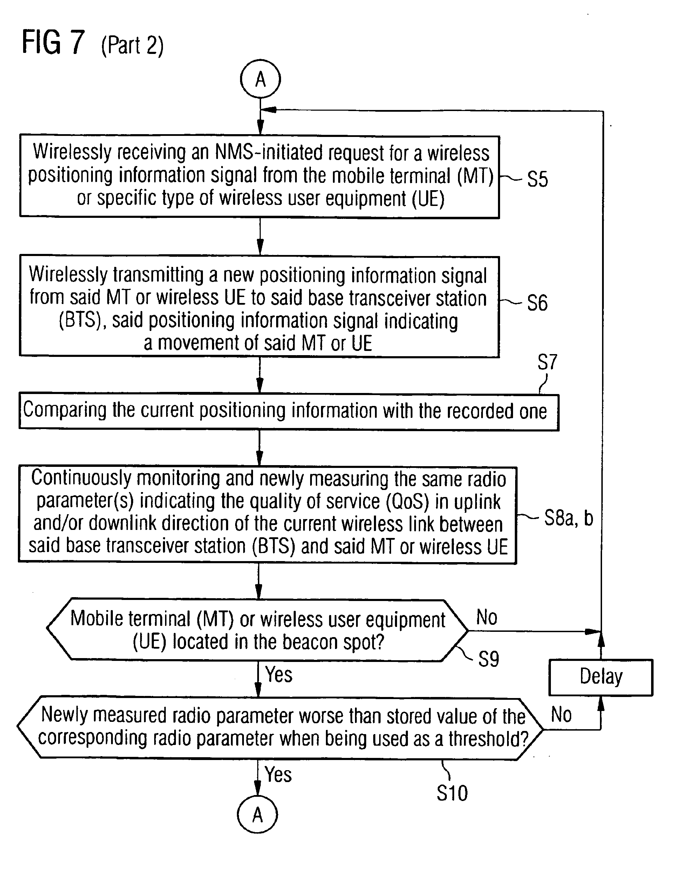

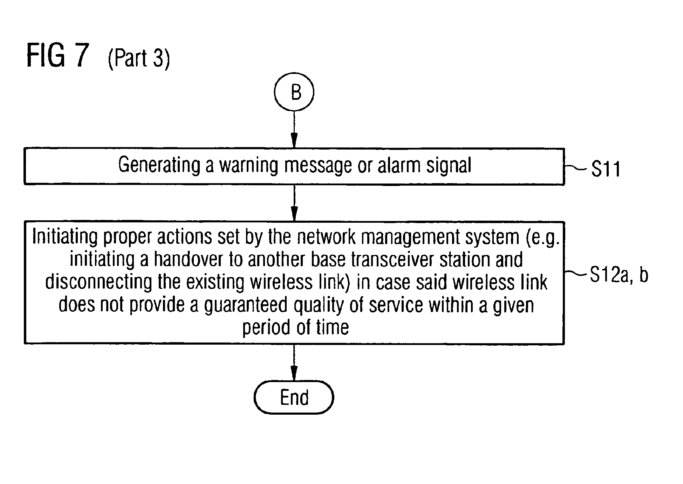

Fig. 7 shows a three-part flow chart which illustrates the above-described method according to the present invention. After having established (S0) a wireless link between a base transceiver station BTS and a standard mobile terminal MT or any other, specific type of wireless user equipment UE being connected to said base transceiver station via the air interface of a cellular wireless communication network (such as e.g. a mobile network according to the ETSI/BRAN, GSM, UMTS, Wi-Fi, W-LAN or IEEE 802.11 standard) and having received (S1) an NMS-initiated request for a wireless positioning information signal from the mobile terminal MT or specific wireless user equipment UE, a positioning information signal indicating the position of the mobile terminal MT or wireless user equipment UE is wirelessly transmitted (S2) via the air interface of the cellular wireless communication network to the base transceiver station BTS. The link performance monitoring system LPMS of said base transceiver station BTS then measures (S3) at least one uplink radio parameter indicating the quality of service of the wireless link from the received positioning information signal. After that, a reference scenario as given by the BTS communicating with the MT or wireless UE when being located at a known geographical position ("beacon spot") within the mobile radio cell is defined, thereby recording (S4a) the received user positioning information and storing (S4b) them together with the measured radio link parameters indicating the quality of the wireless link in a data base DB which is located at the BTS site. After having received (S5) an NMS-initiated request for a wireless positioning information signal from the mobile terminal MT or wireless user equipment UE, said mobile terminal MT or wireless user equipment UE wirelessly transmits (S6) new positioning information to said base transceiver station BTS which may e.g. indicate a movement of said mobile terminal MT or wireless user equipment UE. The current positioning information is then compared (S7) with the recorded positioning information which is stored in the data base. The base transceiver station thereby continuously monitors (S8a) and newly measures (S8b) the same radio link parameter(s) indicating the quality of service (QoS) in uplink and/or downlink direction of the current wireless link between said base transceiver station BTS and said mobile terminal MT or wireless user equipment UE. If the mobile terminal MT or wireless user equipment UE is located in the beacon spot, which is determined by the query in step S9, and if the newly measured radio link parameter(s) are worse than stored value of the corresponding radio link parameter(s) when being used as a threshold, which is asked in query S10, alarm signaling unit ASU generates (S11) a warning message or alarm signal. Otherwise, the procedure is again continued with step S5. In case said wireless link does not provide a guaranteed quality of service within a given period of time, proper actions set by the network management system NMS are taken. For example, a handover procedure for executing a handover to another base transceiver station may be initiated (S12a), and the existing wireless link may be disconnected (S12b).

### APPLICATIONS OF THE INVENTION

Practical examples of frequently offered location-based services in the scope of which the present invention can advantageously be applied are e.g. location-based services which are used for providing emergency information for a district (e.g. closing of a park, fire alarms, warning of dangers), for advertising (inauguration of a new shop, announcement for the beginning of an event in a few minutes), for triggering a service if the user enters a specific area (e.g. offering of specific information therefor), for changing to a better (or cheaper) type of connection link (such as e.g. W-LAN, Bluetooth etc.) or for triggering a service, if the user stays at the same place for a certain period of time (e.g. when queuing at a cash desk or in front of an entrance, when regarding a display or poster, waiting at a bus stop, etc.). Other examples of application may be informing the user when approaching to a specific place, e.g. a restaurant or a hotel, informing the user when approaching to a specific other user (such as e.g. a friend, a job colleague, another player of a game the user is involved, etc.) or to a specific appliance (such as e.g. a parking ticket automat), informing the user, if a person or appliance leaves a certain area (theft protection system, child leaves party, etc.), location-dependent accounting of call charges (in particular, the subscriber must be informed that the accounting of call charges changes if he/she leaves or enters a certain area) as well as statistical evaluations (such as e.g. determining the number of mobile devices in a certain area for better recognition of a traffic jam or reacting to the raised demand for public means of transport after the end of a mass event, such as e.g. a concert, sport event etc.). Location-based service information can also be broadcasted within a cell such that all mobile terminals which are located in this cell can receive this information. The mechanisms of the location-based services are specified in "Location Services (LCS). Service Description. Stage 1" (3GPP TS 22.071, 3rd Generation Partnership Project) and "Functional Stage 2: Description of Location Services (LCS)" (3GPP TS 23.271, 3rd Generation Partnership Project) by the Technical Specification Group Services and System Aspects. Basically a so-called "LCS client" (e.g. a software unit in the mobile terminal or in the net) requires accordingly a location-dependent service at a "LCS server", that determines the position of the mobile terminal then and provides the corresponding service the enquiring "LCS client".

While the present invention has been illustrated and described in detail in the drawings and in the foregoing description, such illustration and description are to be considered illustrative or exemplary and not restrictive, which means that the invention is not limited to the disclosed embodiments. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures can not be used to advantage. A computer program may be stored/distributed on a suitable medium, such as e.g. an optical storage medium or a solidstate medium supplied together with or as part of other hardware, but may also be distributed in other forms, such as e.g. via the Internet or other wired or wireless telecommunication systems. Furthermore, any reference signs in the claims should not be construed as limiting the scope of the invention.

## Claims

1. A network management system **characterised in that** it has access to a base transceiver station's link performance monitoring system (LPMS) and location measurement unit (LMU), the latter being used for detecting current positioning information signals which are transmitted from a standard mobile terminal (MT) or any other, specific type of wireless user equipment (UE) via the air interface of a cellular wireless communication network, RAN, to a base transceiver station (BTS) of said network,
wherein said network management system (NMS) comprises an integrated alarm signaling unit (ASU) which is adapted to generate a warning message or alarm signal if at least one continuously monitored radio link parameter indicating the quality of service, QoS, in uplink and/or downlink direction of the current wireless link established between said base transceiver station (BTS) and said mobile terminal (MT) or wireless user equipment (UE), when the latter is moving, becomes worse than a predefined threshold value, and wherein said radio link parameter is derived from a current measurement of at least one positioning information signal transmitted from said mobile terminal (MT) or wireless user equipment (UE) to said base transceiver station (BTS).

2. The network management system according to claim 1, wherein said threshold value indicates a specific value of the corresponding radio link parameter in a fixed range around a certain position of said mobile terminal (MT) or wireless user equipment (UE) in the mobile radio cell in which said base transceiver station (BTS) is located.

3. The network management system according to claim 2, wherein said alarm signaling unit (ASU) is adapted to generate said warning message or alarm signal based on the result of a comparison between a currently measured value of the continuously monitored signal-to-noise-plus-interference ratio, SINR1, and/or bit error rate, BER1, of a positioning information signal transmitted over the wireless link between said base transceiver station (BTS) and said mobile terminal (MT) or wireless user equipment (UE) and a previously measured, stored value of the corresponding radio link parameter which indicates the signal-to-noise-plus-interference ratio, SINR2, and/or bit error rate BER2, of the corresponding positioning information signal for said mobile terminal (MT) or wireless user equipment (UE) when being located within a fixed range around a predefined, known position within the mobile radio cell.

4. The network management system according to claim 2, wherein said alarm signaling unit (ASU) is adapted to generate said warning message or alarm signal based on the result of a comparison between a currently measured value of the continuously monitored signal-to-noise-plus-interference ratio, SINR1, and/or bit error rate, BER1, of a positioning information signal transmitted over the wireless link between said base transceiver station (BTS) and said mobile terminal (MT) or wireless user equipment (UE) and a previously measured, stored value of the corresponding radio link parameter which indicates the signal-to-noise-plus-interference ratio, SINR2, and/or bit error rate, BER2, of the corresponding positioning information signal for said mobile terminal (MT) or wireless user equipment (UE) when being located at a known position within the intersectional radio cell areas of at least two adjacent base transceiver stations (BTS1, BTS2 and BTS3) within the coverage range of the cellular wireless communication network, RAN.

5. The network management system according to anyone of claims 3 or 4,
comprising a storage unit, SU, with an integrated data base (DB) for recording and storing said positioning information and the corresponding radio link parameter.

6. The network management system according to claim 5, wherein said alarm signaling unit (ASU) is adapted to generate different levels of a warning message or different levels of an alarm signal depending on the magnitude and/or algebraic sign of the difference between the measured value of the currently detected radio link parameter and the stored value of the corresponding radio link parameter characterizing the quality of service, QoS, of the wireless link between said base transceiver station (BTS) and said mobile terminal (MT) or wireless user equipment (UE).

7. A base transceiver station **characterised in that** it hosts a network management system (NMS) having access to said base transceiver station's link performance monitoring system (LPMS) and location measurement unit (LMU), the latter being used for detecting current user equipment positioning information signals which are transmitted from a standard mobile terminal (MT) or any other, specific type of wireless user equipment (UE) via the air interface of a cellular radio access network RAN, to a base transceiver station (BTS) of said network,
wherein said network management system (NMS) comprises an integrated alarm signaling unit (ASU) which is adapted to generate a warning message or alarm signal if at least one continuously monitored radio link parameter indicating the quality of service, QoS, in uplink and/or downlink direction of the current wireless link established between said base transceiver station (BTS) and said mobile terminal (MT) or wireless user equipment (UE), when the latter is moving, becomes worse than a predefined threshold value, and wherein said radio link parameter is derived from a current measurement of at least one positioning information signal transmitted from said mobile terminal (MT) or wireless user equipment (UE) to said base transceiver station (BTS).

8. The base transceiver station according to claim 7, wherein said threshold value indicates a specific value of the corresponding radio link parameter in a fixed range around a certain position of said mobile terminal (MT) or wireless user equipment (UE) in the mobile radio cell in which said base transceiver station (BTS) is located.

9. The base transceiver station according to claim 8, wherein said alarm signaling unit (ASU) is adapted to generate said warning message or alarm signal based on the result of a comparison between a currently measured value of the continuously monitored signal-to-noise-plus-interference ratio, SINR1, and/or bit error rate, BER1, of a positioning information signal transmitted over the wireless link between said base transceiver station (BTS) and said mobile terminal (MT) or wireless user equipment (UE) and a previously measured, stored value of the corresponding radio link parameter which indicates the signal-to-noise-plus-interference ratio, SINR2, and/or bit error rate, BER2, of the corresponding positioning information signal for said mobile terminal (MT) or wireless user equipment (UE) when being located within a fixed range around a predefined, known position within the mobile radio cell.

10. The base transceiver station according to claim 8, wherein said alarm signaling unit (ASU) is adapted to generate said warning message or alarm signal based on the result of a comparison between a currently measured value of the continuously monitored signal-to-noise-plus-interference ratio, SINR1, and/or bit error rate, BER1, of a positioning information signal transmitted over the wireless link between said base transceiver station (BTS) and said mobile terminal (MT) or wireless user equipment (UE) and a previously measured, stored value of the corresponding radio link parameter which indicates the signal-to-noise-plus-interference ratio, SINR2, and/or bit error rate, BER2, of the corresponding positioning information signal for said mobile terminal (MT) or wireless user equipment (UE) when being located at a known position within the intersectional radio cell areas of at least two adjacent base transceiver stations (BTS1, BTS2 and BTS3) within the coverage range of the cellular radio access network, RAN.

11. The base transceiver station according to anyone of claims 9 or 10,
wherein said network management system (NMS) comprises a storage unit, SU, with an integrated data base (DB) for recording and storing said positioning information and the corresponding radio link parameter.

12. The base transceiver station according to claim 11, wherein said alarm signaling unit (ASU) is adapted to generate different levels of a warning message or different levels of an alarm signal depending on the magnitude and/or algebraic sign of the difference between the measured value of the currently detected radio link parameter and the stored value of the corresponding radio link parameter characterizing the quality of service, QoS, of the wireless link between said base transceiver station (BTS) and said mobile terminal (MT) or wireless user equipment (UE).

13. A radio network controller for controlling the data transfer between a number of mobile terminals (MTs) and base transceiver stations (BTSs) interconnected over the air interface of a fixed or mobile cellular radio access network RAN, said radio network controller (RNC) **characterised in that** the radio network controller hosts a network management system (NMS) having access to a base transceiver station's link performance monitoring system (LPMS) and location measurement unit (LMU), the latter being used for detecting current user equipment positioning information signals which are transmitted from a standard mobile terminal (MT) or any other, specific type of wireless user equipment (UE) via the air interface of said radio access network (RAN) to a base transceiver station (BTS) of said network,
wherein said network management system (NMS) comprises an integrated alarm signaling unit (ASU) which is adapted to generate a warning message or alarm signal if at least one continuously monitored radio link parameter indicating the quality of service, QoS, in uplink and/or downlink direction of the current wireless link established between said base transceiver station (BTS) and said mobile terminal (MT) or wireless user equipment (UE), when the latter is moving, becomes worse than a predefined threshold value, and wherein said radio link parameter is derived from a current measurement of at least one positioning information signal transmitted from said mobile terminal (MT) or wireless user equipment (UE) to said base transceiver station (BTS).

14. The radio network controller according to claim 13, wherein said threshold value indicates a specific value of the corresponding radio link parameter in a fixed range around a certain position of said mobile terminal (MT) or wireless user equipment (UE) in the mobile radio cell in which said base transceiver station (BTS) is located.

15. The radio network controller according to claim 14, wherein said alarm signaling unit (ASU) is adapted to generate said warning message or alarm signal based on the result of a comparison between a currently measured value of the continuously monitored signal-to-noise-plus-interference ratio, SINR1, and/or bit error rate, BER1, of a positioning information signal transmitted over the wireless link between said base transceiver station (BTS) and said mobile terminal (MT) or wireless user equipment (UE) and a previously measured, stored value of the corresponding radio link parameter which indicates the signal-to-noise-plus-interference ratio, SINR2, and/or bit error rate, BER2, of the corresponding positioning information signal for said mobile terminal (MT) or wireless user equipment (UE) when being located within a fixed range around a predefined, known position within the mobile radio cell.

16. The radio network controller according to claim 14, wherein said alarm signaling unit (ASU) is adapted to generate said warning message or alarm signal based on the result of a comparison between a currently measured value of the continuously monitored signal-to-noise-plus-interference ratio, SINR1, and/or bit error rate, BER1, of a positioning information signal transmitted over the wireless link between said base transceiver station (BTS) and said mobile terminal (MT) or wireless user equipment (UE) and a previously measured, stored value of the corresponding radio link parameter which indicates the signal-to-noise-plus-interference ratio, SINR2, and/or bit error rate, BER2, of the corresponding positioning information signal for said mobile terminal (MT) or wireless user equipment (UE) when being located at a known position within the intersectional radio cell areas of at least two adjacent base transceiver stations (BTS1, BTS2 and BTS3) within the coverage range of the cellular radio access network, RAN.

17. The radio network controller according to anyone of claims 15 or 16,
wherein said network management system (NMS) comprises a storage unit, SU, with an integrated data base (DB) for recording and storing said positioning information and the corresponding radio link parameter.

18. The radio network controller according to claim 17, wherein said alarm signaling unit (ASU) is adapted to generate different levels of a warning message or different levels of an alarm signal depending on the magnitude and/or algebraic sign of the difference between the measured value of the currently detected radio link parameter and the stored value of the corresponding radio link parameter characterizing the quality of service, QoS, of the wireless link between said base transceiver station (BTS) and said mobile terminal (MT) or wireless user equipment (UE).

19. A method for monitoring the link performance of a wireless link between a base transceiver station (BTS) and a standard mobile terminal (MT) or any other, specific type of wireless user equipment (UE) being connected to said base transceiver station via the air interface of a cellular wireless communication network, RAN, **characterised in that** the base transceiver station (BTS) is capable of providing data of a requested (S1) location-based service and the standard mobile terminal (MT) or any other, specific type of wireless user equipment (UE) is capable of requesting this service,
wherein a warning message or alarm signal is generated (S11) if at least one continuously monitored (S8a) and newly measured (S8b) radio link parameter indicating the quality of service, QoS, in uplink and/or downlink direction of the current wireless link established (SO) between said base transceiver station (BTS) and said mobile terminal (MT) or wireless user equipment (UE), when the latter is moving, becomes worse than a predefined threshold value, and wherein said radio link parameter is derived from a current measurement of at least one positioning information signal transmitted (S6) from said mobile terminal (MT) or wireless user equipment (UE) to said base transceiver station (BTS).

20. The method according to claim 19,
wherein said threshold value indicates a specific value of the corresponding radio link parameter in a fixed range around a certain position of said mobile terminal (MT) or wireless user equipment (UE) in the mobile radio cell in which said base transceiver station (BTS) is located.

21. The method according to claim 20,
wherein said warning message or alarm signal is generated (S11) based on the result of a comparison (S10) between a currently measured value of the continuously monitored (S8a) and newly measured (S8b) signal-to-noise-plus-interference ratio, SINR1, and/or bit error rate, BER1, of a positioning information signal transmitted (S6) over the wireless link between said base transceiver station (BTS) and said mobile terminal (MT) or wireless user equipment (UE) and a previously measured (S3) and stored (S4) value of the corresponding radio link parameter which indicates the signal-to-noise-plus-interference ratio, SINR2, and/or bit error rate, BER2, of the corresponding positioning information signal for said mobile terminal (MT) or wireless user equipment (UE) when being located within a fixed range around a predefined, known position within the mobile radio cell.

22. The method according to claim 20,
wherein said warning message or alarm signal is generated (S11) based on the result of a comparison (S10) between a currently measured value of the continuously monitored (S8a) and newly measured (S8b) signal-to-noise-plus-interference ratio, SINR1, and/or bit error rate, BER1, of a positioning information signal transmitted (S6) over the wireless link between said base transceiver station (BTS) and said mobile terminal (MT) or wireless user equipment (UE) and a previously measured (S3) and stored (S4) value of the corresponding radio link parameter which indicates the signal-to-noise-plus-interference ratio, SINR2, and/or bit error rate, BER2, of the corresponding positioning information signal for said mobile terminal (MT) or wireless user equipment (UE) when being located at a known position within the intersectional radio cell areas of at least two adjacent base transceiver stations (BTS1, BTS2 and BTS3) within the coverage range of the cellular wireless communication network, RAN.

23. The method according to anyone of claims 21 or 22, wherein different levels of a warning message or different levels of an alarm signal are generated (S11) depending on the magnitude and/or algebraic sign of the difference between the measured value of the currently detected radio link parameter and the stored value of the corresponding radio link parameter characterizing the quality of service, QoS, of the wireless link between said base transceiver station (BTS) and said mobile terminal (MT) or wireless user equipment (UE).

24. Use of a base transceiver station's location measurement unit (LMU) for gaining information about the quality of service in uplink and/or downlink direction of a wireless link via the air interface of a cellular mobile radio network, RAN, between said base transceiver station (BTS) and a mobile terminal (MT) or wireless user equipment (UE) connected to and being located in the same mobile radio cell as said base transceiver station (BTS) by measuring current values of at least one detected radio link parameter indicating the signal-to-noise-plus-interference ratio, SINR, and/or bit error rate, BER, of a continuously monitored positioning information signal received from a mobile terminal or user equipment and comparing these current parameter values with at least one previously measured (S3) and stored (S4) value of the corresponding radio link parameter which indicates the signal-to-noise-plus-interference ratio, SINR2, and/or bit error rate, BER2, of the corresponding positioning information signal for said mobile terminal (MT) or wireless user equipment (UE) when being located within a fixed range around a predefined, known position within the mobile radio cell or when being located at a known position within the intersectional radio cell areas of at least two adjacent base transceiver stations (BTS1, BTS2 and BTS3) within the coverage range of the cellular mobile radio network, RAN.

25. A computer program product for monitoring the link performance of a wireless link between a base transceiver station (BTS) providing data of a requested location-based service and a standard mobile terminal (MT) or any other, specific type of wireless user equipment (UE) requesting (S1) this service and being connected to said base transceiver station via the air interface of a cellular wireless communication network, RAN, when being installed and running on a network management system having access to the base transceiver station's link performance monitoring system (LPMS) and location measurement unit (LMU),
wherein a warning message or alarm signal is generated (S11) if at least one continuously monitored (S8a) and newly measured (S8b) radio link parameter indicating the quality of service, QoS, in uplink and/or downlink direction of the current wireless link established (S0) between said base transceiver station (BTS) and said mobile terminal (MT) or wireless user equipment (UE), when the latter is moving, becomes worse than a predefined threshold value, and wherein said radio link parameter is derived from a current measurement of at least one positioning information signal transmitted (S6) from said mobile terminal (MT) or wireless user equipment (UE) to said base transceiver station (BTS).

26. The computer program product according to claim 25, wherein said threshold value indicates a specific value of the corresponding radio link parameter in a fixed range around a certain position of said mobile terminal (MT) or wireless user equipment (UE) in the mobile radio cell in which said base transceiver station (BTS) is located.

27. The computer program product according to claim 26, wherein said warning message or alarm signal is generated (S11) based on the result of a comparison (S10) between a currently measured value of the continuously monitored (S8a) and newly measured (S8b) signal-to-noise-plus-interference ratio, SINR1, and/or bit error rate BER1 of a positioning information signal transmitted (S6) over the wireless link between said base transceiver station (BTS) and said mobile terminal (MT) or wireless user equipment (UE) and a previously measured (S3) and stored (S4) value of the corresponding radio link parameter which indicates the signal-to-noise-plus-inter-ference ratio, SINR2, and/or bit error rate, BER2, of the corresponding positioning information signal for said mobile terminal (MT) or wireless user equipment (UE) when being located within a fixed range around a predefined, known position within the mobile radio cell.

28. The computer program product according to claim 26, wherein said warning message or alarm signal is generated (S11) based on the result of a comparison (S10) between a currently measured value of the continuously monitored (S8a) and newly measured (S8b) signal-to-noise-plus-interference ratio, SINR1, and/or bit error rate, BER1, of a positioning information signal transmitted (S6) over the wireless link between said base transceiver station (BTS) and said mobile terminal (MT) or wireless user equipment (UE) and a previously measured (S3) and stored (S4) value of the corresponding radio link parameter which indicates the signal-to-noise-plus-inter-ference ratio, SINR2, and/or bit error rate, BER2, of the corresponding positioning information signal for said mobile terminal (MT) or wireless user equipment (UE) when being located at a known position within the intersectional radio cell areas of at least two adjacent base transceiver stations (BTS1, BTS2 and BTS3) within the coverage range of the cellular wireless communication network, RAN.

29. The computer program product according to anyone of claims 27 or 28,
wherein different levels of a warning message or different levels of an alarm signal are generated (S11) depending on the magnitude and/or algebraic sign of the difference between the measured value of the currently detected radio link parameter and the stored value of the corresponding radio link parameter characterizing the quality of service, QoS, of the wireless link between said base transceiver station (BTS) and said mobile terminal (MT) or wireless user equipment (UE).

## Patentansprüche

1. Netzmanagement-System, **dadurch gekennzeichnet, dass** es Zugang zu dem Streckenleistungsüberwachungssystem (LPMS - Link Performance Monitoring System) und der Positionierungseinheit (LMU - Location Measurement Unit) einer Basis-Funkstation hat, wobei die Letztere zum Erkennen von aktuellen Ortungsinformationssignalen benutzt wird, die von einem standardmäßigen mobilen Endgerät (MT - Mobile Terminal) oder einer sonstigen bestimmten Art von drahtlosem Teilnehmergerät (UE - User Equipment) über die Luftschnittstelle eines zellularen drahtlosen Kommunikationsnetzes RAN zu einer Basis-Funkstation (BTS - Base Transceiver Station) des Netzes übertragen werden,
wobei das Netzmanagement-System (NMS) eine integrierte Alarmgabeeinheit (ASU - Alarm Signaling Unit) umfasst, die zum Erzeugen einer Warnmeldung oder eines Alarmsignals eingerichtet ist, wenn mindestens ein fortlaufend überwachter, die Dienstgüte (QoS - Quality of Service) in der Aufwärts- und/oder Abwärtsrichtung der aktuellen zwischen der Basis-Funkstation (BTS) und dem mobilen Endgerät (MT) oder dem drahtlosen Teilnehmergerät (UE), wenn sich das letztere bewegt, hergestellten drahtlosen Strecke anzeigender Funkstreckenparameter schlechter als ein vordefinierter Schwellwert wird, und wobei der Funkstreckenparameter aus einer aktuellen Messung mindestens eines von dem mobilen Endgerät (MT) oder dem drahtlosen Teilnehmergerät (UE) zu der Basis-Funkstation (BTS) übertragenen Ortungsinformationssignals abgeleitet ist.

2. Netzmanagement-System nach Anspruch 1,
wobei der Schwellwert einen bestimmten Wert des entsprechenden Funkstreckenparameters in einem festen Bereich um eine gewisse Position des mobilen Endgeräts (MT) oder des drahtlosen Teilnehmergeräts (UE) herum in der Mobilfunkzelle, in der sich die Basis-Funkstation (BTS) befindet, anzeigt.

3. Netzmanagement-System nach Anspruch 2,
wobei die Alarmgabeeinheit (ASU) zum Erzeugen der Warnungsmeldung oder des Alarmsignals auf Grundlage des Ergebnisses eines Vergleichs zwischen einem aktuell gemessenen Wert des fortlaufend überwachten Signal-Interferenz-Verhältnisses einschließlich Rauschen (SINR1 - Signal-to-Noise-plus-Interference Ratio) und/oder Bitfehlerrate (BER1 - Bit Error Rate) eines über die drahtlose Strecke zwischen der Basis-Funkstation (BTS) und dem mobilen Endgerät (MT) oder drahtlosen Teilnehmergerät (UE) übertragenen Ortungsinformationssignals und einem vorher gemessenen gespeicherten Wert des entsprechenden Funkstreckenparameters, der das Signal-Interferenz-Verhältnis einschließlich Rauschen SINR2 und/oder Bitfehlerrate BER2 des entsprechenden Ortungsinformationssignals für das mobile Endgerät (MT) oder drahtlose Teilnehmergerät (UE) anzeigt, wenn diese sich innerhalb eines festen Bereichs um eine vordefinierte bekannte Stellung herum innerhalb der Mobilfunkzelle befinden, ausgelegt ist.

4. Netzmanagement-System nach Anspruch 2,
wobei die Alarmgabeeinheit (ASU) zum Erzeugen der Warnungsmeldung oder des Alarmsignals auf Grundlage des Ergebnisses eines Vergleichs zwischen einem aktuell gemessenen Wert des fortlaufend überwachten Signal-Interferenz-Verhältnisses einschließlich Rauschen (SINR1 - Signal-to-Noise-plus-Interference Ratio) und/oder Bitfehlerrate (BER1 - Bit Error Rate) eines über die drahtlose Strecke zwischen der Basis-Funkstation (BTS) und dem mobilen Endgerät (MT) oder drahtlosen Teilnehmergerät (UE) übertragenen Ortungsinformationssignals und einem vorher gemessenen gespeicherten Wert des entsprechenden Funkstreckenparameters, der das Signal-Interferenz-Verhältnis einschließlich Rauschen SINR2 und/oder Bitfehlerrate BER2 des entsprechenden Ortungsinformationssignals für das mobile Endgerät (MT) oder drahtlose Teilnehmergerät (UE) anzeigt, wenn diese sich an einer bekannten Stellung innerhalb der Funkzellen-Schnittstellenbereiche von mindestens zwei benachbarten Basis-Funkstationen (BTS1, BTS2 und BTS3) innerhalb des Versorgungsbereichs des zellularen drahtlosen Kommunikationsnetzes RAN befinden, ausgelegt ist.

5. Netzmanagement-System nach einem beliebigen der Ansprüche 3 oder 4,
umfassend eine Speichereinheit SU mit einer integrierten Datenbank (DB) zum Aufzeichnen und Speichern der Ortungsinformationen und des entsprechenden Funkstreckenparameters.

6. Netzmanagement-System nach Anspruch 5,
wobei die Alarmgabeeinheit (ASU) zum Erzeugen unterschiedlicher Grade einer Warnungsnachricht oder unterschiedlicher Grade eines Alarmsignals in Abhängigkeit von der Größe und/oder dem algebraischen Vorzeichen des Unterschiedes zwischen dem gemessenen Wert des aktuell erkannten Funkstreckenparameters und dem gespeicherten Wert des entsprechenden, die Dienstgüte QoS kennzeichnenden Funkstreckenparameters der drahtlosen Strecke zwischen der Basis-Funkstation (BTS) und dem mobilen Endgerät (MT) oder drahtlosen Teilnehmergerät (UE) ausgelegt ist.

7. Basis-Funkstation, **dadurch gekennzeichnet, dass** sie einem Netzmanagement-System (NMS) mit Zugang zu dem Streckenleistungsüberwachungssystem (LPMS - Link Performance Monitoring System) und der Positionierungseinheit (LMU - Location Measurement Unit) einer Basis-Funkstation als Host dient, wobei die Positionierungseinheit zum Erkennen aktueller Teilnehmergerät-Ortungsinformationssignale benutzt wird, die von einem standardmäßigen mobilen Endgerät (MT) oder einer beliebigen sonstigen spezifischen Art drahtlosen Teilnehmergeräts (UE) über die Luftschnittstelle eines Zellularfunkzugangsnetzes (RAN - Radio Access Network) zu einer Basis-Funkstation (BTS) des Netzes übertragen werden,
wobei das Netzmanagement-System (NMS) eine integrierte Alarmgabeeinheit (ASU - Alarm Signaling Unit) umfasst, die zum Erzeugen einer Warnmeldung oder eines Alarmsignals eingerichtet ist, wenn mindestens ein fortlaufend überwachter, die Dienstgüte (QoS - Quality of Service) in der Aufwärts- und/oder Abwärtsrichtung der aktuellen zwischen der Basis-Funkstation (BTS) und dem mobilen Endgerät (MT) oder dem drahtlosen Teilnehmergerät (UE), wenn sich das Letztere bewegt, hergestellten drahtlosen Strecke anzeigender Funkstreckenparameter, schlechter als ein vordefinierter Schwellwert wird, und wobei der Funkstreckenparameter aus einer aktuellen Messung mindestens eines von dem mobilen Endgerät (MT) oder dem drahtlosen Teilnehmergerät (UE) zu der Basis-Funkstation (BTS) übertragenen Ortungsinformationssignals abgeleitet ist.

8. Basis-Funkstation nach Anspruch 7,
wobei der Schwellwert einen bestimmten Wert des entsprechenden Funkstreckenparameters in einem festen Bereich um eine gewisse Position des mobilen Endgeräts (MT) oder des drahtlosen Teilnehmergeräts (UE) herum in der Mobilfunkzelle, in der sich die Basis-Funkstation (BTS) befindet, anzeigt.

9. Basis-Funkstation nach Anspruch 8,
wobei die Alarmgabeeinheit (ASU) zum Erzeugen der Warnungsmeldung oder des Alarmsignals auf Grundlage des Ergebnisses eines Vergleichs zwischen einem aktuell gemessenen Wert des fortlaufend überwachten Signal-Interferenz-Verhältnisses einschließlich Rauschen (SINR1 - Signal-to-Noise-plus-Interference Ratio) und/oder Bitfehlerrate (BER1 - Bit Error Rate) eines über die drahtlose Strecke zwischen der Basis-Funkstation (BTS) und dem mobilen Endgerät (MT) oder drahtlosen Teilnehmergerät (UE) übertragenen Ortungsinformationssignals und einem vorher gemessenen gespeicherten Wert des entsprechenden Funkstreckenparameters, der das Signal-Interferenz-Verhältnis einschließlich Rauschen SINR2 und/oder Bitfehlerrate BER2 des entsprechenden Ortungsinformationssignals für das mobile Endgerät (MT) oder drahtlose Teilnehmergerät (UE) anzeigt, wenn diese sich innerhalb eines festen Bereichs um eine vordefinierte bekannte Stellung herum innerhalb der Mobilfunkzelle befinden, ausgelegt ist.

10. Basis-Funkstation nach Anspruch 8,
wobei die Alarmgabeeinheit (ASU) zum Erzeugen der Warnungsmeldung oder des Alarmsignals auf Grundlage des Ergebnisses eines Vergleichs zwischen einem aktuell gemessenen Wert des fortlaufend überwachten Signal-Interferenz-Verhältnisses einschließlich Rauschen (SINR1 - Signal-to-Noise-plus-Interference Ratio) und/oder Bitfehlerrate (BER1 - Bit Error Rate) eines über die drahtlose Strecke zwischen der Basis-Funkstation (BTS) und dem mobilen Endgerät (MT) oder drahtlosen Teilnehmergerät (UE) übertragenen Ortungsinformationssignals und einem vorher gemessenen gespeicherten Wert des entsprechenden Funkstreckenparameters, der das Signal-Interferenz-Verhältnis einschließlich Rauschen SINR2 und/oder Bitfehlerrate BER2 des entsprechenden Ortungsinformationssignals für das mobile Endgerät (MT) oder drahtlose Teilnehmergerät (UE) anzeigt, wenn diese sich an einer bekannten Stellung innerhalb der Funkzellen-Schnittstellenbereiche von mindestens zwei benachbarten Basis-Funkstationen (BTS1, BTS2 und BTS3) innerhalb des Versorgungsbereichs des Zellularfunkzugangsnetzes RAN befinden, ausgelegt ist.

11. Basis-Funkstation nach einem beliebigen der Ansprüche 9 oder 10,
wobei das Netzmanagement-System (NMS) eine Speichereinheit SU mit einer integrierten Datenbank (DB) zum Aufzeichnen und Speichern der Ortungsinformationen und der entsprechenden Funkstreckenparameter umfasst.

12. Basis-Funkstation nach Anspruch 11,
wobei die Alarmgabeeinheit (ASU) zum Erzeugen unterschiedlicher Grade einer Warnungsnachricht oder unterschiedlicher Grade eines Alarmsignals in Abhängigkeit von der Größe und/oder dem algebraischen Vorzeichen des Unterschiedes zwischen dem gemessenen Wert des aktuell erkannten Funkstreckenparameters und dem gespeicherten Wert des entsprechenden, die Dienstgüte QoS kennzeichnenden Funkstreckenparameters der drahtlosen Strecke zwischen der Basis-Funkstation (BTS) und dem mobilen Endgerät (MT) oder drahtlosen Teilnehmergerät (UE) ausgelegt ist.

13. Funknetzsteuerung zum Steuern der Datenübertragung zwischen einer Anzahl über die Luftschnittstelle eines festen oder mobilen Zellularfunkzugangsnetzes RAN miteinander verbundenen mobilen Endgeräten (MT) und Basis-Funkstationen (BTS), wobei die Funknetzsteuerung (RNC - Radio Network Controller) **dadurch gekennzeichnet ist, dass** sie einem Netzmanagement-System (NMS) mit Zugang zu dem Streckenleistungsüberwachungssystem (LPMS - Link Performance Monitoring System) und der Positionierungseinheit (LMU) einer Basis-Funkstation als Host dient, wobei die Positionierungseinheit zum Erkennen aktueller Teilnehmergerät-Ortungsinformationssignale benutzt wird, die von einem standardmäßigen mobilen Endgerät (MT) oder einer beliebigen sonstigen spezifischen Art drahtlosen Teilnehmergeräts (UE) über die Luftschnittstelle des Funkzugangsnetzes (RAN) zu einer Basis-Funkstation (BTS) des Netzes übertragen werden wobei das Netzmanagement-System (NMS) eine integrierte Alarmgabeeinheit (ASU) umfasst, die zum Erzeugen einer Warnmeldung oder eines Alarmsignals eingerichtet ist, wenn mindestens ein fortlaufend überwachter, die Dienstgüte (QoS - Quality of Service) in der Aufwärts- und/oder Abwärtsrichtung der aktuellen zwischen der Basis-Funkstation (BTS) und dem mobilen Endgerät (MT) oder dem drahtlosen Teilnehmergerät (UE), wenn sich das Letztere bewegt, hergestellten drahtlosen Strecke anzeigender Funkstreckenparameter schlechter als ein vordefinierter Schwellwert wird, und wobei der Funkstreckenparameter aus einer aktuellen Messung mindestens eines von dem mobilen Endgerät (MT) oder dem drahtlosen Teilnehmergerät (UE) zu der Basis-Funkstation (BTS) übertragenen Ortungsinformationssignals abgeleitet ist.

14. Funknetzsteuerung nach Anspruch 13,
wobei der Schwellwert einen bestimmten Wert des entsprechenden Funkstreckenparameters in einem festen Bereich um eine gewisse Position des mobilen Endgeräts (MT) oder des drahtlosen Teilnehmergeräts (UE) herum in der Mobilfunkzelle, in der sich die Basis-Funkstation (BTS) befindet, anzeigt.

15. Funknetzsteuerung nach Anspruch 14,
wobei die Alarmgabeeinheit (ASU) zum Erzeugen der Warnungsmeldung oder des Alarmsignals auf Grundlage des Ergebnisses eines Vergleichs zwischen einem aktuell gemessenen Wert des fortlaufend überwachten Signal-Interferenz-Verhältnisses einschließlich Rauschen (SINR1 - Signal-to-Noise-plus-Interference Ratio) und/oder Bitfehlerrate (BER1 - Bit Error Rate) eines über die drahtlose Strecke zwischen der Basis-Funkstation (BTS) und dem mobilen Endgerät (MT) oder drahtlosen Teilnehmergerät (UE) übertragenen Ortungsinformationssignals und einem vorher gemessenen gespeicherten Wert des entsprechenden Funkstreckenparameters, der das Signal-Interferenz-Verhältnis einschließlich Rauschen SINR2 und/oder Bitfehlerrate BER2 des entsprechenden Ortungsinformationssignals für das mobile Endgerät (MT) oder drahtlose Teilnehmergerät (UE) anzeigt, wenn diese sich innerhalb eines festen Bereichs um eine vordefinierte bekannte Stellung herum innerhalb der Mobilfunkzelle befinden, ausgelegt ist.

16. Funknetzsteuerung nach Anspruch 14,
wobei die Alarmgabeeinheit (ASU) zum Erzeugen der Warnungsmeldung oder des Alarmsignals auf Grundlage des Ergebnisses eines Vergleichs zwischen einem aktuell gemessenen Wert des fortlaufend überwachten Signal-Interferenz-Verhältnisses einschließlich Rauschen (SINR1 - Signal-to-Noise-plus-Interference Ratio) und/oder Bitfehlerrate (BER1 - Bit Error Rate) eines über die drahtlose Strecke zwischen der Basis-Funkstation (BTS) und dem mobilen Endgerät (MT) oder drahtlosen Teilnehmergerät (UE) übertragenen Ortungsinformationssignals und einem vorher gemessenen gespeicherten Wert des entsprechenden Funkstreckenparameters, der das Signal-Interferenz-Verhältnis einschließlich Rauschen SINR2 und/oder Bitfehlerrate BER2 des entsprechenden Ortungsinformationssignals für das mobile Endgerät (MT) oder drahtlose Teilnehmergerät (UE) anzeigt, wenn diese sich an einer bekannten Stellung innerhalb der Funkzellen-Schnittstellenbereiche von mindestens zwei benachbarten Basis-Funkstationen (BTS1, BTS2 und BTS3) innerhalb des Versorgungsbereichs des Zellularfunkzugangsnetzes RAN befinden, ausgelegt ist.

17. Funknetzsteuerung nach einem beliebigen der Ansprüche 15 oder 16,
wobei das Netzmanagement-System (NMS) eine Speichereinheit SU mit einer integrierten Datenbank (DB) zum Aufzeichnen und Speichern der Ortungsinformationen und des entsprechenden Funkstreckenparameters umfasst.

18. Funknetzsteuerung nach Anspruch 17,
wobei die Alarmgabeeinheit (ASU) zum Erzeugen unterschiedlicher Grade einer Warnungsnachricht oder unterschiedlicher Grade eines Alarmsignals in Abhängigkeit von der Größe und/oder dem algebraischen Vorzeichen des Unterschiedes zwischen dem gemessenen Wert des aktuell erkannten Funkstreckenparameters und dem gespeicherten Wert des entsprechenden, die Dienstgüte QoS kennzeichnenden Funkstreckenparameters der drahtlosen Strecke zwischen der Basis-Funkstation (BTS) und dem mobilen Endgerät (MT) oder drahtlosen Teilnehmergerät (UE) ausgelegt ist.

19. Verfahren zum Überwachen der Streckenleistung einer drahtlosen Strecke zwischen einer Basis-Funkstation (BTS) und einem standardmäßigen mobilen Endgerät (MT) oder irgendeiner sonstigen spezifischen Art von drahtlosem Teilnehmergerät (UE), das mit der Basis-Funkstation über die Luftschnittstelle eines zellularen drahtlosen Kommunikationsnetzes RAN verbunden ist, **dadurch gekennzeichnet, dass** die Basis-Funkstation (BTS) zum Bereitstellen von Daten eines angeforderten (S1) standortbasierenden Dienstes fähig ist und das standardmäßige mobile Endgerät (MT) oder eine beliebige sonstige spezifische Art von drahtlosem Teilnehmergerät (UE) zum Anfordern dieses Dienstes fähig ist,
wobei eine Warnmeldung oder ein Alarmsignal erzeugt wird (S11), wenn mindestens ein fortlaufend überwachter (S8a) und neugemessener (S8b), die Dienstgüte (QoS - Quality of Service) in der Aufwärts- und/oder Abwärtsrichtung der aktuellen zwischen der Basis-Funkstation (BTS) und dem mobilen Endgerät (MT) oder dem drahtlosen Teilnehmergerät (UE), wenn sich das letztere bewegt, hergestellten drahtlosen Strecke (S0) anzeigender Funkstreckenparameter schlechter als ein vordefinierter Schwellwert wird, und wobei der Funkstreckenparameter aus einer aktuellen Messung mindestens eines von dem mobilen Endgerät (MT) oder dem drahtlosen Teilnehmergerät (UE) zu der Basis-Funkstation (BTS) übertragenen (S6) Ortungsinformationssignals abgeleitet ist.

20. Verfahren nach Anspruch 19,
wobei der Schwellwert einen bestimmten Wert des entsprechenden Funkstreckenparameters in einem festen Bereich um eine gewisse Position des mobilen Endgeräts (MT) oder des drahtlosen Teilnehmergeräts (UE) herum in der Mobilfunkzelle, in der sich die Basis-Funkstation (BTS) befindet, anzeigt.

21. Verfahren nach Anspruch 20,
wobei die Warnmeldung oder das Alarmsignal erzeugt wird (S11) auf Grundlage des Ergebnisses eines Vergleichs (S10) zwischen einem aktuell gemessenen Wert des fortlaufend überwachten (S8a) und neugemessenen (S8b) Signal-Interferenz-Verhältnisses einschließlich Rauschen (SINR1 - Signal-to-Noise-plus-Interference Ratio) und/oder Bitfehlerrate (BER1 - Bit Error Rate) eines über die drahtlose Strecke zwischen der Basis-Funkstation (BTS) und dem mobilen Endgerät (MT) oder drahtlosen Teilnehmergerät (UE) übertragenen (S6) Ortungsinformationssignals und einem vorher gemessenen (S3) gespeicherten (S4) Wert des entsprechenden Funkstreckenparameters, der das Signal-Interferenz-Verhältnis einschließlich Rauschen SINR2 und/oder Bitfehlerrate BER2 des entsprechenden Ortungsinformationssignals für das mobile Endgerät (MT) oder drahtlose Teilnehmergerät (UE) anzeigt, wenn diese sich innerhalb eines festen Bereichs um eine vordefinierte bekannte Stellung herum innerhalb der Mobilfunkzelle befinden.

22. Verfahren nach Anspruch 20,
wobei die Warnungsmeldung oder das Alarmsignal erzeugt wird (S11) auf Grundlage des Ergebnisses eines Vergleichs (S10) zwischen einem aktuell gemessenen Wert des fortlaufend überwachten (S8a) und neugemessenen (S8b) Signal-Interferenz-Verhältnisses einschließlich Rauschen (SINR1 - Signal-to-Noise-plus-Interference Ratio) und/oder Bitfehlerrate (BER1 - Bit Error Rate) eines über die drahtlose Strecke zwischen der Basis-Funkstation (BTS) und dem mobilen Endgerät (MT) oder drahtlosen Teilnehmergerät (UE) übertragenen (S6) Ortungsinformationssignals und einem vorher gemessenen (S3) gespeicherten (S4) Wert des entsprechenden Funkstreckenparameters, der das Signal-Interferenz-Verhältnis einschließlich Rauschen SINR2 und/oder Bitfehlerrate BER2 des entsprechenden Ortungsinformationssignals für das mobile Endgerät (MT) oder drahtlose Teilnehmergerät (UE) anzeigt, wenn diese sich an einer bekannten Stellung innerhalb der Funkzellen-Schnittstellenbereiche von mindestens zwei benachbarten Basis-Funkstationen (BTS1, BTS2 und BTS3) innerhalb des Versorgungsbereichs des zellularen drahtlosen Kommunikationsnetzes RAN befinden.

23. Verfahren nach einem beliebigen der Ansprüche 21 oder 22, wobei unterschiedliche Grade einer Warnungsmeldung oder unterschiedliche Grade eines Alarmsignals erzeugt werden (S11) in Abhängigkeit von der Größe und/oder dem algebraischen Vorzeichen des Unterschiedes zwischen dem gemessenen Wert des aktuell erkannten Funkstreckenparameters und dem gespeicherten Wert des entsprechenden, die Dienstgüte QoS der drahtlosen Strecke zwischen der Basis-Funkstation (BTS) und dem mobilen Endgerät (MT) oder drahtlosen Teilnehmergerät (UE) kennzeichnenden Funkstreckenparameters.

24. Verwendung einer Positionierungseinheit (LMU - Location Measurement Unit) einer Basis-Funkstation zum Erlangen von Informationen über die Dienstgüte in der Aufwärts- und/oder Abwärtsrichtung einer drahtlosen Strecke über die Luftschnittstelle eines zellularen Mobilfunknetzes RAN zwischen der Basis-Funkstation (BTS) und einem mobilen Endgerät (MT) oder drahtlosem Teilnehmergerät (UE), das mit der gleichen Mobilfunkzelle wie die Basis-Funkstation (BTS) verbunden ist und sich darin befindet, durch Messen aktueller Werte von mindestens einem erkannten, das Signal-Interferenz-Verhältnis einschließlich Rauschen SINR und/oder die Bitfehlerrate BER eines von einem mobilen Endgerät oder Teilnehmergerät empfangenen fortlaufend überwachten Ortungsinformationssignals anzeigenden Funkstreckenparameter und Vergleichen dieser aktuellen Parameterwerte mit mindestens einem vorher gemessenen (S3) und gespeicherten (S4) Wert des entsprechenden Funkstreckenparameters, der das Signal-Interferenz-Verhältnis einschließlich Rauschen SINR2 und/oder die Bitfehlerrate BER2 des entsprechenden Ortungsinformationssignals für das mobile Endgerät (MT) oder drahtlose Teilnehmergerät (UE) anzeigt, wenn diese sich innerhalb eines festen Bereichs um eine vordefinierte bekannte Stellung herum innerhalb der Mobilfunkzelle befinden oder an einer bekannten Stellung innerhalb der Funkzellenschnittstellenbereiche von mindestens zwei benachbarten Basis-Funkstationen (BTS1, BTS2 und BTS3) innerhalb des Versorgungsbereichs des zellularen Mobilfunknetzes RAN befinden.

25. Computerprogrammprodukt zum Überwachen der Streckenleistung einer drahtlosen Strecke zwischen einer Daten eines angeforderten standortbasierenden Dienstes bereitstellenden Basis-Funkstation (BTS) und einem standardmäßigen mobilen Endgerät (MT) oder irgendeiner sonstigen spezifischen Art drahtlosen Teilnehmergeräts (UE), das diesen Dienst anfordert (S1) und mit der Basis-Funkstation über die Luftschnittstelle eines zellularen drahtlosen Kommunikationsnetzes RAN verbunden ist, wenn es auf einem Netzmanagement-System mit Zugang zu dem Streckenleistungsüberwachungssystem (LPMS) und der Positionierungseinheit (LMU) der Basis-Funkstation installiert ist und darauf abläuft,
wobei eine Warnmeldung oder ein Alarmsignal erzeugt wird (S11), wenn mindestens ein fortlaufend überwachter (S8a) und neugemessener (S8b), die Dienstgüte (QoS - Quality of Service) in der Aufwärts- und/oder Abwärtsrichtung der aktuellen zwischen der Basis-Funkstation (BTS) und dem mobilen Endgerät (MT) oder dem drahtlosen Teilnehmergerät (UE), wenn sich das Letztere bewegt, hergestellten (S0) drahtlosen Strecke anzeigender Funkstreckenparameter schlechter als ein vordefinierter Schwellwert wird, und wobei der Funkstreckenparameter aus einer aktuellen Messung mindestens eines von dem mobilen Endgerät (MT) oder dem drahtlosen Teilnehmergerät (UE) zu der Basis-Funkstation (BTS) übertragenen (S6) Ortungsinformationssignals abgeleitet ist.

26. Computerprogrammprodukt nach Anspruch 25,
wobei der Schwellwert einen bestimmten Wert des entsprechenden Funkstreckenparameters in einem festen Bereich um eine gewisse Position des mobilen Endgeräts (MT) oder des drahtlosen Teilnehmergeräts (UE) herum in der Mobilfunkzelle, in der sich die Basis-Funkstation (BTS) befindet, anzeigt.

27. Computerprogrammprodukt nach Anspruch 26,
wobei die Warnmeldung oder das Alarmsignal erzeugt wird (S11) auf Grundlage des Ergebnisses eines Vergleichs (S10) zwischen einem aktuell gemessenen Wert des fortlaufend überwachten (S8a) und neugemessenen (S8b) Signal-Interferenz-Verhältnisses einschließlich Rauschen SINR1 und/oder der Bitfehlerrate BER1 eines über die drahtlose Strecke zwischen der Basis-Funkstation (BTS) und dem mobilen Endgerät (MT) oder drahtlosen Teilnehmergerät (UE) übertragenen (S6) Ortungsinformationssignals und einem vorher gemessenen (S3) und gespeicherten (S4) Wert des entsprechenden Funkstreckenparameters, der das Signal-Interferenz-Verhältnis einschließlich Rauschen SINR2 und/oder Bitfehlerrate BER2 des entsprechenden Ortungsinformationssignals für das mobile Endgerät (MT) oder drahtlose Teilnehmergerät (UE) anzeigt, wenn diese sich innerhalb eines festen Bereichs um eine vordefinierte bekannte Stellung herum innerhalb der Mobilfunkzelle befinden.

28. Computerprogrammprodukt nach Anspruch 26,
wobei die Warnmeldung oder das Alarmsignal erzeugt wird (S11) auf Grundlage des Ergebnisses eines Vergleichs (S10) zwischen einem aktuell gemessenen Wert des fortlaufend überwachten (S8a) und neugemessenen (S8b) Signal-Interferenz-Verhältnisses einschließlich Rauschen (SINR1 - Signal-to-Noise-plus-Interference Ratio) und/oder Bitfehlerrate (BER1 - Bit Error Rate) eines über die drahtlose Strecke zwischen der Basis-Funkstation (BTS) und dem mobilen Endgerät (MT) oder drahtlosen Teilnehmergerät (UE) übertragenen (S6) Ortungsinformationssignals und einem vorher gemessenen (S3) gespeicherten (S4) Wert des entsprechenden Funkstreckenparameters, der das Signal-Interferenz-Verhältnis einschließlich Rauschen SINR2 und/oder Bitfehlerrate BER2 des entsprechenden Ortungsinformationssignals für das mobile Endgerät (MT) oder drahtlose Teilnehmergerät (UE) anzeigt, wenn diese sich an einer bekannten Stellung innerhalb der Funkzellen-Schnittstellenbereiche von mindestens zwei benachbarten Basis-Funkstationen (BTS1, BTS2 und BTS3) innerhalb des Versorgungsbereichs des zellularen drahtlosen Kommunikationsnetzes RAN befinden.

29. Computerprogrammprodukt nach einem beliebigen der Ansprüche 27 oder 28,
wobei unterschiedliche Grade einer Warnmeldung oder unterschiedliche Grade eines Alarmsignals in Abhängigkeit von der Größe und/oder dem algebraischen Vorzeichen des Unterschieds zwischen dem gemessenen Wert des aktuell erkannten Funkstreckenparameters und dem gespeicherten Wert des entsprechenden, die Dienstgüte QoS der drahtlosen Strecke zwischen der Basis-Funkstation (BTS) und dem mobilen Endgerät (MT) oder drahtlosem Teilnehmergerät (UE) kennzeichnenden Funkstreckenparameters erzeugt werden (S11).

## Revendications

1. Un système de gestion de réseau **caractérisé en ce qu'**il possède un accès à un système de surveillance des performances d'une liaison (LPMS) d'une station émettrice-réceptrice de base et à une unité de mesure de position (LMU), cette dernière étant utilisée pour détecter des signaux d'information d'un positionnement actuel qui sont transmis à partir d'un terminal mobile standard (MT) ou de tout autre type spécifique d'équipement utilisateur (UE) sans fil par l'intermédiaire de l'interface hertzienne d'un réseau de communication sans fil cellulaire, RAN, à une station émettrice-réceptrice de base (BTS) dudit réseau,
dans lequel ledit système de gestion de réseau (NMS) comprend une unité de signalisation d'alarme (ASU) intégrée qui est adaptée de façon à générer un message d'alerte ou un signal d'alarme si au moins un paramètre de liaison radio surveillé en permanence indiquant la qualité de service, QoS, dans une direction de liaison montante et/ou de liaison descendante de la liaison sans fil actuelle établie entre ladite station émettrice-réceptrice de base (BTS) et ledit terminal mobile (MT) ou ledit équipement utilisateur (UE) sans fil, lorsque ce dernier se déplace, devient pire qu'une valeur seuil prédéfinie, et dans lequel ledit paramètre de liaison radio est dérivé d'une mesure actuelle d'au moins un signal d'information de positionnement transmis dudit terminal mobile (MT) ou dudit équipement utilisateur (UE) sans fil à ladite station émettrice-réceptrice de base (BTS).

2. Le système de gestion de réseau selon la Revendication 1, dans lequel ladite valeur seuil prédéfinie indique une valeur spécifique d'un paramètre de liaison radio correspondant dans une portée fixe autour d'une certaine position dudit terminal mobile (MT) ou dudit équipement utilisateur (UE) sans fil dans une cellule radio mobile dans laquelle se trouve ladite station émettrice-réceptrice de base (BTS).

3. Le système de gestion de réseau selon la Revendication 2, dans lequel ladite unité de signalisation d'alarme (ASU) est adaptée de façon à générer ledit message d'alerte ou ledit signal d'alarme en fonction du résultat d'une comparaison entre une valeur actuellement mesurée du rapport signal sur bruit plus brouillage, SINR1, surveillé en permanence et/ou du taux d'erreurs sur les bits, BER1, d'un signal d'information de positionnement transmis par l'intermédiaire de la liaison sans fil entre ladite station émettrice-réceptrice de base (BTS) et ledit terminal mobile (MT) ou ledit équipement utilisateur (UE) et une valeur conservée en mémoire mesurée antérieurement du paramètre de liaison radio correspondant qui indique le rapport signal sur bruit plus brouillage, SINR2, et/ou le taux d'erreurs sur les bits, BER2, d'un signal d'information de positionnement correspondant pour ledit terminal mobile (MT) ou ledit équipement utilisateur (UE) lorsqu'il se trouve dans une portée fixe autour d'une position connue prédéfinie à l'intérieur de la cellule radio mobile.

4. Le système de gestion de réseau selon la Revendication 2, dans lequel ladite unité de signalisation d'alarme (ASU) est adaptée de façon à générer ledit message d'alerte ou ledit signal d'alarme en fonction du résultat d'une comparaison entre une valeur actuellement mesurée du rapport signal sur bruit plus brouillage, SINR1, surveillé en permanence et/ou du taux d'erreurs sur les bits, BER1, d'un signal d'information de positionnement transmis par l'intermédiaire de la liaison sans fil entre ladite station émettrice-réceptrice de base (BTS) et ledit terminal mobile (MT) ou ledit équipement utilisateur (UE) et une valeur conservée en mémoire mesurée antérieurement du paramètre de liaison radio correspondant qui indique le rapport signal sur bruit plus brouillage, SINR2, et/ou le taux d'erreurs sur les bits, BER2, d'un signal d'information de positionnement correspondant pour ledit terminal mobile (MT) ou ledit équipement utilisateur (UE) lorsqu'il se trouve à une position connue à l'intérieur des zones de cellules radio en intersection d'au moins deux stations émettrices-réceptrices de base adjacentes (BTS1, BTS2 et BTS3) à l'intérieur de la zone de couverture du réseau de communication sans fil cellulaire, RAN.

5. Le système de gestion de réseau selon l'une quelconque des Revendications 3 ou 4,
comprenant une unité mémoire, SU, avec une base de données (DB) intégrée destinée à enregistrer et à conserver en mémoire lesdites informations de positionnement et le paramètre de liaison radio correspondant.

6. Le système de gestion de réseau selon la Revendication 5, dans lequel ladite unité de signalisation d'alarme (ASU) est adaptée de façon à générer différents niveaux d'un message d'alerte ou différents niveaux d'un signal d'alarme en fonction de la grandeur et/ou le signe algébrique de la différence entre la valeur mesurée du paramètre de liaison radio actuellement détecté et la valeur conservée en mémoire du paramètre de liaison radio correspondant caractérisant la qualité de service, QoS, de la liaison sans fil entre ladite station émettrice-réceptrice de base (BTS) et ledit terminal mobile (MT) ou ledit équipement utilisateur (UE).

7. Une station émettrice-réceptrice de base **caractérisée en ce qu'**elle héberge un système de gestion de réseau (NMS) possédant un accès audit système de surveillance des performances d'une liaison (LPMS) de ladite station émettrice-réceptrice de base et à ladite unité de mesure de position (LMU), cette dernière étant utilisée pour détecter des signaux d'information d'un positionnement actuel d'un équipement utilisateur qui sont transmis à partir d'un terminal mobile standard (MT) ou de tout autre type spécifique d'équipement utilisateur (UE) sans fil par l'intermédiaire de l'interface hertzienne d'un réseau d'accès radio cellulaire, RAN, à une station émettrice-réceptrice de base (BTS) dudit réseau,
dans lequel ledit système de gestion de réseau (NMS) comprend une unité de signalisation d'alarme (ASU) intégrée qui est adaptée de façon à générer un message d'alerte ou un signal d'alarme si au moins un paramètre de liaison radio surveillé en permanence indiquant la qualité de service, QoS, dans une direction de liaison montante et/ou de liaison descendante de la liaison sans fil actuelle établie entre ladite station émettrice-réceptrice de base (BTS) et ledit terminal mobile (MT) ou ledit équipement utilisateur (UE) sans fil, lorsque ce dernier se déplace, devient pire qu'une valeur seuil prédéfinie, et dans lequel ledit paramètre de liaison radio est dérivé d'une mesure actuelle d'au moins un signal d'information de positionnement transmis dudit terminal mobile (MT) ou dudit équipement utilisateur (UE) sans fil vers ladite station émettrice-réceptrice de base (BTS).

8. La station émettrice-réceptrice de base selon la Revendication 7,
dans laquelle la valeur seuil prédéfinie indique une valeur spécifique d'un paramètre de liaison radio correspondant dans une portée fixe autour d'une certaine position dudit terminal mobile (MT) ou dudit équipement utilisateur (UE) sans fil dans la cellule radio mobile dans laquelle se trouve ladite station émettrice-réceptrice de base (BTS).

9. La station émettrice-réceptrice de base selon la Revendication 8,
dans laquelle ladite unité de signalisation d'alarme (ASU) est adaptée de façon à générer ledit message d'alerte ou ledit signal d'alarme en fonction du résultat d'une comparaison entre une valeur actuellement mesurée du rapport signal sur bruit plus brouillage, SINR1, surveillé en permanence et/ou du taux d'erreurs sur les bits, BER1, d'un signal d'information de positionnement transmis par l'intermédiaire de la liaison sans fil entre ladite station émettrice-réceptrice de base (BTS) et ledit terminal mobile (MT) ou ledit équipement utilisateur (UE) sans fil et une valeur conservée en mémoire mesurée antérieurement du paramètre de liaison radio correspondant qui indique le rapport signal sur bruit plus brouillage, SINR2, et/ou le taux d'erreurs sur les bits, BER2, du signal d'information de positionnement correspondant pour ledit terminal mobile (MT) ou ledit équipement utilisateur (UE) lorsqu'il se trouve dans une portée fixe autour d'une position connue prédéfinie à l'intérieur de la cellule radio mobile.

10. La station émettrice-réceptrice de base selon la Revendication 8,
dans laquelle ladite unité de signalisation d'alarme (ASU) est adaptée de façon à générer ledit message d'alerte ou ledit signal d'alarme en fonction du résultat d'une comparaison entre une valeur actuellement mesurée du rapport signal sur bruit plus brouillage, SINR1, surveillé en permanence et/ou du taux d'erreurs sur les bits, BER1, d'un signal d'information de positionnement transmis par l'intermédiaire de la liaison sans fil entre ladite station émettrice-réceptrice de base (BTS) et ledit terminal mobile (MT) ou ledit équipement utilisateur (UE) et une valeur conservée en mémoire mesurée antérieurement du paramètre de liaison radio correspondant qui indique le rapport signal sur bruit plus brouillage, SINR2, et/ou le taux d'erreurs sur les bits, BER2, du signal d'information de positionnement correspondant pour ledit terminal mobile (MT) ou ledit équipement utilisateur (UE) lorsqu'il se trouve à une position connue à l'intérieur des zones de cellules radio en intersection d'au moins deux stations émettrices-réceptrices de base adjacentes (BTS1, BTS2 et BTS3) à l'intérieur de la zone de couverture du réseau d'accès radio cellulaire, RAN.

11. La station émettrice-réceptrice de base selon l'une quelconque des Revendications 9 ou 10,
dans laquelle le système de gestion de réseau (NMS) comprend une unité mémoire, SU, avec une base de données (DB) intégrée destinée à enregistrer et à conserver en mémoire lesdites informations de positionnement et le paramètre de liaison radio correspondant.

12. La station émettrice-réceptrice de base selon la Revendication 11,
dans laquelle ladite unité de signalisation d'alarme (ASU) est adaptée de façon à générer différents niveaux d'un message d'alerte ou différents niveaux d'un signal d'alarme en fonction de la grandeur et/ou du signe algébrique de la différence entre la valeur mesurée du paramètre de liaison radio actuellement détecté et de la valeur conservée en mémoire du paramètre de liaison radio correspondant caractérisant la qualité de service, QoS, de la liaison sans fil entre ladite station émettrice-réceptrice de base (BTS) et ledit terminal mobile (MT) ou ledit équipement utilisateur (UE).

13. Un système de commande de réseau radio destiné à commander le transfert de données entre un certain nombre de terminaux mobiles (MTs) et de stations émettrices-réceptrices de base (BTSs) interconnectés par l'intermédiaire de l'interface hertzienne d'un réseau d'accès radio cellulaire, RAN, mobile ou fixe, ledit système de commande de réseau radio (RNC) étant **caractérisé en ce que** le système de commande de réseau radio héberge un système de gestion de réseau (NMS) possédant un accès à un système de surveillance des performances d'une liaison (LPMS) d'une station émettrice-réceptrice de base et à une unité de mesure de position (LMU), cette dernière étant utilisée pour détecter des signaux d'information d'un positionnement actuel d'un équipement utilisateur qui sont transmis d'un terminal mobile (MT) standard ou de tout autre type d'équipement utilisateur (UE) sans fil via l'interface hertzienne dudit réseau d'accès radio (RAN) vers une station émettrice-réceptrice de base (BTS) dudit réseau,
dans lequel ledit système de commande de réseau (NMS) comprend une unité de signalisation d'alarme (ASU) intégrée qui est adaptée de façon à générer un message d'alerte ou un signal d'alarme si au moins un paramètre de liaison radio surveillé en permanence indiquant la qualité de service, QoS, dans une direction de liaison montante et/ou de liaison descendante de la liaison sans fil actuelle établie entre ladite station émettrice-réceptrice de base (BTS) et ledit terminal mobile (MT) ou ledit équipement utilisateur (UE), lorsque ce dernier se déplace, devient pire qu'une valeur seuil prédéfinie, et dans lequel ledit paramètre de liaison radio est dérivé d'une mesure actuelle d'au moins un signal d'information de positionnement transmis dudit terminal mobile (MT) ou dudit équipement utilisateur (UE) sans fil vers ladite station émettrice-réceptrice de base (BTS).

14. Le système de commande de réseau radio selon la Revendication 13,
dans lequel ladite valeur seuil prédéfinie indique une valeur spécifique du paramètre de liaison radio correspondant dans une portée fixe autour d'une certaine position dudit terminal mobile (MT) ou dudit équipement utilisateur (UE) sans fil dans la cellule radio mobile dans laquelle se trouve ladite station émettrice-réceptrice de base (BTS).

15. Le système de commande de réseau radio selon la Revendication 14,
dans lequel ladite unité de signalisation d'alarme (ASU) est adaptée de façon à générer ledit message d'alerte ou ledit signal d'alarme en fonction du résultat d'une comparaison entre une valeur actuellement mesurée du rapport signal sur bruit plus brouillage, SINR1, surveillé en permanence et/ou du taux d'erreurs sur les bits, BER1, d'un signal d'information de positionnement transmis par l'intermédiaire de la liaison sans fil entre la station émettrice-réceptrice de base (BTS) et ledit terminal mobile (MT) ou ledit équipement utilisateur (UE) et une valeur conservée en mémoire mesurée antérieurement du paramètre de liaison radio correspondant qui indique le rapport signal sur bruit plus brouillage, SINR2, et/ou le taux d'erreurs sur les bits, BER2, du signal d'information de positionnement correspondant pour ledit terminal mobile (MT) ou ledit équipement utilisateur (UE) lorsqu'il se trouve dans une portée fixe autour d'une position connue prédéfinie à l'intérieur de la cellule radio mobile.

16. Le système de commande de réseau radio selon la Revendication 14,
dans lequel ladite unité de signalisation d'alarme (ASU) est adaptée de façon à générer ledit message d'alerte ou ledit signal d'alarme en fonction du résultat d'une comparaison entre une valeur actuellement mesurée du rapport signal sur bruit plus brouillage, SINR1, surveillé en permanence et/ou du taux d'erreurs sur les bits, BER1, d'un signal d'information de positionnement transmis par l'intermédiaire de la liaison sans fil entre ladite station émettrice-réceptrice de base (BTS) et ledit terminal mobile (MT) ou ledit équipement utilisateur (UE) et une valeur conservée en mémoire mesurée antérieurement du paramètre de liaison radio correspondant qui indique le rapport signal sur bruit plus brouillage, SINR2, et/ou le taux d'erreurs sur les bits, BER2, du signal d'information de positionnement correspondant pour ledit terminal mobile (MT) ou ledit équipement utilisateur (UE) lorsqu'il se trouve à une position connue à l'intérieur des zones de cellules radio en intersection d'au moins deux stations émettrices-réceptrices de base adjacentes (BTS1, BTS2 et BTS3) à l'intérieur de la zone de couverture du réseau d'accès radio cellulaire, RAN.

17. Le système de commande de réseau radio selon l'une quelconque des Revendications 15 ou 16,
dans lequel ledit système de gestion de réseau (NMS) comprend une unité mémoire, SU, avec une base de données (DB) intégrée destinée à enregistrer et à conserver en mémoire lesdites informations de positionnement et le paramètre de liaison radio correspondant.

18. Le système de commande de réseau radio selon la Revendication 17,
dans lequel ladite unité de signalisation d'alarme (ASU) est adaptée de façon à générer différents niveaux d'un message d'alerte ou différents niveaux d'un signal d'alarme en fonction de la grandeur et/ou du signe algébrique de la différence entre la valeur mesurée du paramètre de liaison radio actuellement détecté et la valeur conservée en mémoire du paramètre de liaison radio correspondant caractérisant la qualité de service, QoS, de la liaison sans fil entre ladite station émettrice-réceptrice de base (BTS) et ledit terminal mobile (MT) ou ledit équipement utilisateur (UE).

19. Un procédé de surveillance des performances de liaison d'une liaison sans fil entre une station émettrice-réceptrice de base (BTS) et un terminal mobile standard (MT) ou tout autre type spécifique d'équipement utilisateur (UE) sans fil relié à ladite station émettrice-réceptrice de base par l'intermédiaire de l'interface hertzienne d'un réseau de communication cellulaire sans fil, RAN, **caractérisé en ce que** la station émettrice-réceptrice de base (BTS) est capable de fournir des données d'un service basé sur l'emplacement (S1) demandé et ledit terminal mobile (MT) ou tout autre type spécifique d'équipement utilisateur (UE) est capable de demander ce service,
dans lequel un message d'alerte ou un signal d'alarme est généré (S11) si au moins un paramètre de liaison radio surveillé en permanence (S8a) ou nouvellement mesuré (S8b) indiquant la qualité de service, QoS, dans une direction de liaison montante et/ou de liaison descendante de la liaison sans fil actuelle établie (S0) entre ladite station émettrice-réceptrice de base (BTS) et ledit terminal mobile (MT) ou ledit équipement utilisateur (UE), lorsque ce dernier se déplace, devient pire qu'une valeur seuil prédéfinie, et dans lequel ledit paramètre de liaison radio est dérivé d'une mesure actuelle d'au moins un signal d'information de positionnement transmis (S6) dudit terminal mobile (MT) ou dudit équipement utilisateur (UE) sans fil vers ladite station émettrice-réceptrice de base (BTS).

20. Le procédé selon la Revendication 19,
dans lequel ladite valeur seuil prédéfinie indique une valeur spécifique d'un paramètre de liaison radio correspondant dans une portée fixe autour d'une certaine position dudit terminal mobile (MT) ou dudit équipement utilisateur (UE) sans fil dans la cellule radio mobile dans laquelle se trouve ladite station émettrice-réceptrice de base (BTS).

21. Le procédé selon la Revendication 20,
dans lequel ledit message d'alerte ou ledit signal d'alarme est généré (S11) en fonction du résultat d'une comparaison (S10) entre une valeur actuellement mesurée du rapport signal sur bruit plus brouillage, SINR1, surveillé en permanence (S8a) et nouvellement mesuré (S8b) et/ou du taux d'erreurs sur les bits, BER1, d'un signal d'information de positionnement transmis (S6) par l'intermédiaire de la liaison sans fil entre ladite station émettrice-réceptrice de base (BTS) et ledit terminal mobile (MT) ou ledit équipement utilisateur (UE) et une valeur mesurée antérieurement (S3) et conservée en mémoire (S4) du paramètre de liaison radio correspondant qui indique le rapport signal sur bruit plus brouillage, SINR2, et/ou le taux d'erreurs sur les bits, BER2, du signal d'information de positionnement correspondant pour ledit terminal mobile (MT) ou ledit équipement utilisateur (UE) lorsqu'il se trouve dans une portée fixe autour d'une position connue prédéfinie à l'intérieur de la cellule radio mobile.

22. Le procédé selon la Revendication 20,
dans lequel ledit message d'alerte ou ledit signal d'alarme est généré (S11) en fonction du résultat d'une comparaison (S10) entre une valeur actuellement mesurée du rapport signal sur bruit plus brouillage, SINR1, surveillé en permanence (S8a) et nouvellement mesuré (S8b) et/ou du taux d'erreurs sur les bits, BER1, d'un signal d'information de positionnement transmis (S6) par l'intermédiaire de la liaison sans fil entre ladite station émettrice-réceptrice de base (BTS) et ledit terminal mobile (MT) ou ledit équipement utilisateur (UE) et une valeur mesurée antérieurement (S3) et conservée en mémoire (S4) du paramètre de liaison radio correspondant qui indique le rapport signal sur bruit plus brouillage, SINR2, et/ou le taux d'erreurs sur les bits, BER2, du signal d'information de positionnement correspondant pour ledit terminal mobile (MT) ou ledit équipement utilisateur (UE) sans fil lorsqu'il se trouve à une position connue à l'intérieur des zones de cellules radio en intersection d'au moins deux stations émettrices-réceptrices de base adjacentes (BTS1, BTS2 et BTS3) à l'intérieur de la zone de couverture du réseau de communication sans fil cellulaire, RAN.

23. Le procédé selon l'une quelconque des Revendications 21 ou 22,
dans lequel différents niveaux d'un message d'alerte ou différents niveaux d'un signal d'alarme sont générés (S11) en fonction de la grandeur et/ou du signe algébrique de la différence entre la valeur mesurée du paramètre de liaison radio actuellement détecté et la valeur conservée en mémoire du paramètre de liaison radio correspondant caractérisant la qualité de service, QoS, de la liaison sans fil entre ladite station émettrice-réceptrice de base (BTS) et ledit terminal mobile (MT) ou ledit équipement utilisateur (UE).

24. L'utilisation d'une unité de mesure de position (LMU) d'une station émettrice-réceptrice de base de façon à obtenir des informations concernant la qualité de service, QoS, dans une direction de liaison montante et/ou de liaison descendante d'une liaison sans fil via l'interface hertzienne d'un réseau radio mobile cellulaire, RAN, entre ladite station émettrice-réceptrice de base (BTS) et un terminal mobile (MT) ou un équipement utilisateur (UE) sans fil relié à et situé dans la même cellule radio mobile que ladite station émettrice-réceptrice de base (BTS) en mesurant des valeurs actuelles d'au moins un paramètre de liaison radio détecté indiquant le rapport signal sur bruit plus brouillage, SINR, et/ou le taux d'erreurs sur les bits, BER, d'un signal d'information de positionnement surveillé en permanence reçu d'un terminal mobile ou d'un équipement utilisateur et en comparant ces valeurs actuelles de paramètre à au moins une valeur mesurée antérieurement (S3) et conservée en mémoire (S4) du paramètre de liaison radio correspondant qui indique le rapport signal sur bruit plus brouillage, SINR2, et/ou le taux d'erreurs sur les bits, BER2, du signal d'information de positionnement correspondant pour ledit terminal mobile (MT) ou ledit équipement utilisateur (UE) lorsqu'il se trouve dans une portée fixe autour d'une position connue prédéfinie à l'intérieur des zones de cellule radio en intersection d'au moins deux stations émettrices-réceptrices de base adjacentes (BTS1, BTS2 et BTS3) à l'intérieur de la zone de couverture du réseau radio mobile cellulaire, RAN.

25. Un programme informatique destiné à surveiller les performances de liaison d'une liaison sans fil entre une station émettrice-réceptrice de base (BTS) fournissant des données d'un service basé sur l'emplacement demandé et un terminal mobile (MT) standard ou tout autre type spécifique d'équipement utilisateur (UE) sans fil demandant (S1) ce service et étant relié à ladite station émettrice-réceptrice de base via l'interface hertzienne d'un réseau de communication sans fil cellulaire, RAN, lorsqu'il est installé et exécuté sur un système de gestion de réseau possédant un accès au système de surveillance des performances d'une liaison (LPMS) d'une station émettrice-réceptrice de base et à l'unité de mesure de position (LMU),
dans lequel un message d'alerte ou un signal d'alarme est généré (S11) si au moins un paramètre de liaison radio surveillé en permanence (S8a) et nouvellement mesuré (S8b) indiquant la qualité de service, QoS, dans une direction de liaison montante et/ou de liaison descendante de la liaison sans fil actuelle établie (S0) entre ladite station émettrice-réceptrice de base (BTS) et ledit terminal mobile (MT) ou ledit équipement utilisateur (UE), lorsque ce dernier se déplace, devient pire qu'une valeur seuil prédéfinie, et dans lequel ledit paramètre de liaison radio est dérivé d'une mesure actuelle d'au moins un signal d'information de positionnement transmis (S6) dudit terminal mobile (MT) ou dudit équipement utilisateur (UE) sans fil vers ladite station émettrice-réceptrice de base (BTS).

26. Le programme informatique selon la Revendication 25,
dans lequel ladite valeur seuil prédéfinie indique une valeur spécifique du paramètre de liaison radio correspondant dans une portée fixe autour d'une certaine position dudit terminal mobile (MT) ou dudit équipement utilisateur (UE) sans fil dans la cellule radio mobile dans laquelle se trouve ladite station émettrice-réceptrice de base (BTS).

27. Le programme informatique selon la Revendication 26,
dans lequel ledit message d'alerte ou ledit signal d'alarme est généré (S11) en fonction du résultat d'une comparaison (S10) entre une valeur actuellement mesurée du rapport signal sur bruit plus brouillage, SINR1, surveillé en permanence (S8a) et nouvellement mesuré (S8b) et/ou du taux d'erreurs sur les bits, BER1, d'un signal d'information de positionnement transmis (S6) par l'intermédiaire de la liaison sans fil entre ladite station émettrice-réceptrice de base (BTS) et ledit terminal mobile (MT) ou ledit équipement utilisateur (UE) sans fil et une valeur mesurée antérieurement (S3) et conservée en mémoire (S4) du paramètre de liaison radio correspondant qui indique le rapport signal sur bruit plus brouillage, SINR2, et/ou le taux d'erreurs sur les bits, BER2, du signal d'information de positionnement correspondant pour ledit terminal mobile (MT) ou ledit équipement utilisateur (UE) sans fil lorsqu'il se trouve dans une portée fixe autour d'une position connue prédéfinie à l'intérieur de la cellule radio mobile.

28. Le programme informatique selon la Revendication 26,
dans lequel ledit message d'alerte ou ledit signal d'alarme est généré (S11) en fonction du résultat d'une comparaison (S10) entre une valeur actuellement mesurée du rapport signal sur bruit plus brouillage, SINR1, surveillé en permanence (S8a) et nouvellement mesuré (S8b), et/ou du taux d'erreurs sur les bits, BER1, d'un signal d'information de positionnement transmis (S6) par l'intermédiaire de la liaison sans fil entre ladite station émettrice-réceptrice de base (BTS) et ledit terminal mobile (MT) ou ledit équipement utilisateur (UE) sans fil et une valeur mesurée antérieurement (S3) et conservée en mémoire (S4) du paramètre de liaison radio correspondant qui indique le rapport signal sur bruit plus brouillage, SINR2, et/ou le taux d'erreurs sur les bits, BER2, du signal d'information de positionnement correspondant pour ledit terminal mobile (MT) ou ledit équipement utilisateur (UE) sans fil lorsqu'il se trouve à une position connue à l'intérieur des zones de cellules radio en intersection d'au moins deux stations émettrices-réceptrices de base adjacentes (BTS1, BTS2 et BTS3) à l'intérieur de la zone de couverture du réseau de communication sans fil cellulaire, RAN.

29. Le programme informatique selon l'une quelconque des Revendications 27 ou 28,
dans lequel différents niveaux d'un message d'alerte ou différents niveaux d'un signal d'alarme sont générés (S11) en fonction de la grandeur et/ou du signe algébrique de la différence entre la valeur mesurée du paramètre de liaison radio détecté et la valeur conservée en mémoire du paramètre de liaison radio correspondant caractérisant la qualité de service, QoS, de la liaison sans fil entre ladite station émettrice-réceptrice de base (BTS) et ledit terminal mobile (MT) ou ledit équipement utilisateur (UE) sans fil.
